# EUROPÄISCHE PATENTSCHRIFT

(11) **EP 3 719 052 B1**
(45) Veröffentlichungstag und Bekanntmachung des Hinweises auf die Patenterteilung: **02.03.2022**
(21) Anmeldenummer: 19166946.4
(22) Anmeldetag: 03.04.2019
(51) Int. Cl.: C08G 64/14, C08G 64/24

(54) **VERFAHREN ZUR HERSTELLUNG VON POLYCARBONAT MIT REDUZIERTEM PHOSGENÜBERSCHUSS**
METHOD FOR THE PREPARATION OF POLYCARBONATE WITH REDUCED PHOSGEN EXCESS
PROCÉDÉ DE PRODUCTION DE POLYCARBONATE À EXCÈS RÉDUIT DE PHOSGÈNE

(43) Veröffentlichungstag der Anmeldung: 07.10.2020
(73) Patentinhaber: Covestro Deutschland AG, 51373 Leverkusen (DE)
(72) Erfinder: BACHMANN, Rolf, 51469 Bergisch Gladbach (DE); MICHELE, Volker, Dr., 51065 Köln (DE); HEIJL, Jan, 9160 Lokeren (BE); COCK, Felix, 2610 Wilrijk (BE)
(74) Vertreter: Levpat

(56) Entgegenhaltungen:
- DE-A1-102008 012 613

## Beschreibung

Gegenstand der vorliegenden Erfindung ist ein Verfahren zur Herstellung von Polycarbonat nach dem Phasengrenzflächenverfahren aus mindestens einem Dihydroxydiarylalkan, Phosgen, mindestens einem Katalysator und mindestens einem Kettenabbrecher, wobei das Verfahren durch einen definierten Energieeintrag zur Dispergierung der wässrigen und organischen Phase einen reduzierten Phosgenüberschuss ermöglicht. Gleichzeitig führt das erfindungsgemäße Verfahren zu einem Polycarbonat mit einem geringen Anteil an Oligomeren sowie einem geringen Anteil an Di-Kettenabbrechercarbonat. Ebenso betrifft die vorliegende Erfindung die Verwendung eines definierten Energieeintrags zur Dispergierung der wässrigen und organischen Phase in einem Verfahren zur Herstellung von Polycarbonat nach dem Phasengrenzflächenverfahren zur Reduzierung des Phosgenüberschusses.

Die Polycarbonatherstellung nach dem Phasengrenzflächenverfahren ist bereits von Schnell, "Chemistry and Physics of Polycarbonates", Polymer Reviews, Volume 9, Interscience Publishers, New York, London, Sydney 1964, S. 33-70; D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistiy Edition, VoL 18, (1980)"; S. 75-90, D. Freitag, U. Grigo, P.R. Müller, N. Nouverne', BAYER AG, "Polycarbonates" in Encyclopedia of Polymer Science and Engineering, Volurne 1 1, Second Edition, 1988, S. 651-692 und schließlich von Dres U. Grigo, K Kircher und P R- Müller "Polycarbonate" in Becker/Braun, Kunststoff-Handbuch, Band 3/1, Polycarbonate, Polyacetale, Polyester, Celluloseester, Crul Hanser Verlag München, Wien 1992, S 118-145 beschrieben worden.

Des Weiteren wird beispielsweise auch in EP-A 0517044 das Phasengrenzflächenverfahren zur Herstellung von Polycarbonat beschrieben.

Dabei erfolgt in der Regel die Phosgenierung eines in wässriger-alkalischer Lösung oder Suspension vorgelegten Di-Natriumsalzes eines Bisphenols oder eines Gemisches verschiedener Bisphenole in Gegenwart eines inerten organischen Lösungsmittels oder Lösungsmittelgemisches, welches neben der wässrigen eine zweite organische Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert, wobei das Molekulargewicht durch geeignete Kettenabbrecher (z. B. monofunktionelle Phenole) kontrolliert werden kann.

Die organische Phase wird schließlich abgetrennt und das Polycarbonat durch verschiedene Aufbereitungsschritte daraus isoliert.

Kontinuierliche Verfahren zur Herstellung von Kondensaten unter Verwendung von Phosgen - beispielsweise die Herstellung von aromatischen Polycarbonaten, oder Polyestercarbonaten oder ihrer Oligomeren - nach dem Phasengrenzflächenverfahren haben in der Regel den Nachteil, dass zur Beschleunigung der Reaktion und/oder Verbesserung der Phasentrennung mehr Phosgen eingesetzt werden muss, als für die Produktbilanz notwendig ist. Der Phosgen-Überschuss wird dann in der Synthese in Form von Nebenprodukten - beispielsweise zusätzlichem Kochsalz oder Alkalicarbonat-Verbindungen - abgebaut. Typischerweise werden für das kontinuierliche Phasengrenzflächenverfahren zur Herstellung von aromatischen Polycarbonaten Phosgenüberschüsse um die 20 Mol-% bezogen auf das zugegebene Diphenolat eingesetzt (vgl. D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692).

Bei einer Reduktion des Phosgenüberschusses treten unerwünschte Nebeneffekte wie eine schlechte Trennung der Dispersion nach dem letzten Reaktionsschritt, und damit erhöhte Wassergehalte in der organischen Lösung bzw. erhöhte Restmonomer oder Kettenabbrechergehalte im Abwasser auf. In der Literatur werden verschiedene Methoden der Reduktion des Phosgenüberschusses diskutiert.

Aus der DE-A 2 725 967 geht die Lehre hervor, dass es für die Phosgenausbeute eines Verfahrens günstig ist, wässrige und organische Phase, die Phosgen enthält, zunächst in einem Rohr zusammenzuführen und dann in einen Reaktor vom Tanktyp einzuführen.

Gemäß einem aus EP-A-304 691 bekannten kontinuierlichen Phasengrenzflächenverfahren zur Herstellung von Polycarbonaten wird eine wässrige Phase aus Diphenolen und der gerade notwendigen Menge Alkalihydroxid mit einer Phosgen enthaltenen organischen Phase in einem Rohr unter Verwendung eines statischen Mischers zusammengeführt. Mit diesem Verfahren können lediglich Prepolymere mit einem Molekulargewicht von 4000 bis 12000 g/mol hergestellt werden.

Aus der EP 0 520 272 B1 geht hervor, dass ein geringer Phosgenüberschuss durch Split des Stroms der BPA-Lösung erreicht werden kann. Der Nachteil des Verfahrens besteht unter anderem auch in dem erhöhten Aufwand der Dosierung eines zweiten BPA-Stroms.

DE 10 2008 012 613 A1 offenbart ein kontinuierliches Verfahren zur Herstellung von Polycarbonat, wobei ein Dispergator zur Dispergierung der organischen und wässrigen Phase verwendet wird. Hier wird es als vorteilhaft beschrieben, dass eine Öl-in-Wasser-Dispersion durch den Dispergator erzeugt wird. Dazu offenbart dieses Dokument allgemein die Verwendung von 2 ^{∗} e⁶ W/m³ bis 5 ^{∗} e⁹ W/m³, bevorzugt von 5 ^{∗} e⁶ W/m³ bis 1 ^{∗} e⁹ W/m³ Energieeintrag durch den Dispergator. Tatsächlich wird in den Beispielen dieses Dokumentes ein Energieeintrag von 1,2 ^{∗} e⁶ W/m³ offenbart, wobei eine Öl-in-Wasser-Dispersion vorliegt. Da der Energieeintrag in den Beispielen nicht mit den allgemein offenbarten Bereichen des Energieeintrags übereinstimmt, liegt es nahe, dass die allgemein offenbarten Energieeinträge in der Beschreibung fehlerhaft beschrieben wurden. Dieses Dokument fokussiert allein auf die Reduzierung des Phosgengehalts und geht weniger auf die Eigenschaften des resultierenden Polycarbonats ein. Insbesondere erwähnt es weder einen Oligomerenanteil im Polycarbonat noch den Gehalt an Di-Kettenabbrechercarbonat.

Die Eigenschaften des resultierenden Polycarbonats (PC) werden jedoch beeinflusst vom Oligomerenanteil im PC und auch dem Anteil des Di-Kettenabbrechercarbonats. Erfindungsgemäß wird unter dem Begriff "Di-Kettenabbrechercarbonat" eine Verbindung verstanden, die durch die Reaktion von zwei Kettenabbrechermolekülen mit Phosgen unter Ausbildung eines Carbonats entsteht. Zu den dadurch beeinflussten Eigenschaften des PCs zählen unter anderem die Schlagzähigkeit, die Glasübergangstemperatur und das Verhalten bei erhöhter Temperatur. Zudem können niedermolekulare Verbindungen zu Bleaching bei der Herstellung von CDs führen. Auch ist zu beachten, dass durch die Ausbildung eines Di-Kettenabbrechercarbonats Kettenabbrecher verloren geht, welcher eigentlich für die Reaktion und ihre Viskositätskontrolle benötigt wird. Somit ist je höher der Anteil an Di-Kettenabbrecher im Polycarbonat ist, die benötigte Menge an Kettenabbrecher höher, was zum einen ökonomisch wie ökologisch weniger vorteilhaft ist und zum anderen die Viskositätskontrolle im Verfahren erschwert. Daher ist es wünschenswert, den Gehalt an Di-Kettenabbrechercarbonat so gering wie möglich zu halten.

Die Bildung von Di-Kettenabbrechercarbonat erfolgt durch die Reaktion von Phosgen mit dem Kettenabbrecher. Daher wird gängigerweise der Kettenabbrecher erst zum Reaktionssystem hinzugegeben, wenn das Phosgen vollständig umgesetzt wurde. Dies kann beispielsweise dadurch erzielt werden, dass ein mehrstufiges Verfahren angewendet wird, wobei in einer ersten Stufe zunächst ein Oligomer hergestellt wird, das in einer 2. Stufe weiter aufkondensiert wird, oder dass der Kettenabbrecher sehr spät im Verfahren bei hohen Umsätzen, d. h. einem bereits größerem Molekulargewichtsaufbau des Polycarbonats, zugegeben wird. Jedoch wird der Gehalt an Oligomeren im resultierenden Polycarbonat gemäß konventioneller Theorie erhöht, wenn der Kettenabbrecher erst bei hohen Umsätzen hinzugegeben wird. Es wurde beschrieben, dass ein hoher Oligomerenanteil zu Sprödigkeit von niedrigmolekularen PC führt, es bei der Extrusion durch Umesterung zu einer Degradation des Molekulargewichts kommen kann und die Schlagzähigkeit verringert wird. Daher wird im Stand der Technik normalerweise das Verfahren so durchgeführt, dass ein Kompromiss geschlossen wird zwischen einem hohen Gehalt an Oligomeren und einem niedrigen Gehalt an Di-Kettenabbrechercarbonat oder aber niedriger Gehalt an Oligomeren und hoher Gehalt an Di-Kettenabbrechercarbonat im Polycarbonat.

In der EP 0 408 924 A2 wird die Herstellung von niedrig molekularen Polycarbonat mit einer engen Molekulargewichtsverteilung, d. h. einem geringen Oligomerenanteil, beschrieben. Um eine solche enge Verteilung zu erzielen, schlägt dieser Stand der Technik ein zweistufiges Verfahren vor, bei dem ein phosgenfreies Bischloroformat mit einem Polymerisationsgrad von 0 bis 6 mit beispielsweise Phenol gecappt wird und anschließend unter Zugabe eines Katalysators und einer Base das erhaltene gecappte Bischloroformat aufkondensiert wird. Auch hier wird Phenol als Kettenabbrecher zu der Bischloroformat-Lösung zu einem Zeitpunkt hinzugegeben, bei dem kein Phosgen (mehr) in der Lösung vorhanden ist. Die EP 0 289 826 A2 betrifft ebenfalls die Herstellung von Polycarbonat mit einem geringen Anteil an Oligomeren. Auch hier wird von einem Bischloroformat mit einem Polymerisationsgrad von 0 bis 6 ausgegangen. Gemäß Beispiel 2 wird dieses Bischloroformat hergestellt in einer Reaktion, bei dem zunächst ein hoher Phosgenüberschuss (739.3 mmol Phosgen auf 250 mmol Bisphenol A) eingesetzt wird. Der nicht abreagierte Anteil an Phosgen wird daher im Anschluss durch die Zugabe von NaOH abgebaut. Erst dann wird der Kettenabbrecher p-t-Butylphenol hinzugegeben. Dies bedeutet, dass auch hier der Kettenabbrecher zu einem Zeitpunkt zum Reaktionssystem gegeben wird, bei dem kein Phosgen mehr vorhanden ist.

In EP 0 640 639 A2 wird ein zweistufiges Verfahren beschrieben, bei dem zunächst Bisphenol A kontinuierlich mit Phosgen im Überschuss umgesetzt wird. Danach erfolgt in einem weiteren Schritt die Trennung der organischen und wässrigen Phase, wobei im Anschluss zur organischen Phase weiteres Bisphenol A und NaOH gegeben wird, wodurch gegebenenfalls noch vorhandenes Phosge abreagiert. Erst dann erfolgt die Zugabe eines Katalysators und des Kettenabbrechers.

In allen zuvor beschriebenen Fällen wird zunächst ein Überschuss an Phosgen eingesetzt, der im Anschluss wieder zerstört wird. Dies ist zum einen nicht wirtschaftlich, da nicht alles Phosgen für die eigentliche Reaktion genutzt wird. Zum anderen ist dies jedoch auch aus ökologischen Gesichtspunkten nicht nachhaltig, da ein zuvor hergestelltes Produkt "ungenutzt" zerstört wird. Zudem erfordern die beschriebenen Verfahren nach der Herstellung des Bischloroformats die Herstellung einer neuen Lösung, was mit entsprechendem Aufwand verbunden ist. Dies führt insbesondere dazu, dass die beschriebenen Verfahren nicht ohne Weiteres als kontinuierliches Verfahren durchgeführt werden können. In diesem Fall würden zusätzliche, zudem gegen Korrosion resistente Apparaturen gebraucht, mit zusätzlichen Verweilzeiten eines hochkorrosiven Materials.

Der vorliegenden Erfindung lag daher die Aufgabe zugrunde ein Verfahren zur Herstellung von Polycarbonat nach dem Phasengrenzflächenverfahren bereitzustellen, bei dem mindestens ein Nachteil des Stands der Technik verbessert wird. Insbesondere lag der vorliegenden Erfindung die Aufgabe zu Grunde, ein Verfahren zur Herstellung von Polycarbonat nach dem Phasengrenzflächenverfahren bereitzustellen, bei dem der Phosgenüberschuss reduziert werden kann. Des Weiteren, bevorzugt gleichzeitig war es dabei wünschenswert, dass ein Polycarbonat resultiert, welches einen niedrigen Oligomerenanteil und damit eine enge Molekulargewichtsverteilung aufweist. Ebenso war es bevorzugt gleichzeitig wünschenswert, dass durch das Verfahren ein Polycarbonat bereitgestellt wird, das einen geringen Gehalt an Di-Kettenabbrechercarbonat aufweist. Dabei lag der vorliegenden Erfindung insbesondere die Aufgabe zu Grunde, ein Verfahren zur Herstellung von Polycarbonat nach dem Phasengrenzflächenverfahren bereitzustellen, welches ein Polycarbonat liefert, welches gleichzeitig einen geringen Anteil an Oligomeren und an Di-Kettenabbrechercarbonat aufweist.

Mindestens eine, bevorzugt alle der oben genannten Aufgaben wurden durch die vorliegende Erfindung gelöst. Überraschend wurde gefunden, durch die Verwendung eines definierten Energieeintrags bei der Dispergierung der wässrigen und organischen Phase der Phosgenüberschuss reduziert werden kann. Dies führt zum einen zu einer wirtschaftlichen Ersparnis, da weniger überschüssiges Phosgen benötigt wird. Gleichzeitig wurde überraschenderweise gefunden, dass durch den erzeugten hohen Phosgenumsatz die Reaktionen der Phosgenierung des mindestens einen Dihydroxydiarylalkans, der Oligomerisierung und der Verseifung getrennt werden können. Dies bedeutet bevorzugt, dass durch den hohen Phosgenumsatz der Zugabe des mindestens einen Kettenabbrechers zum Reaktionssystem früher erfolgen kann. Insbesondere bedeutet dies, dass die Zugabe des Kettenabbrechers zum Reaktionssystem auch zu einem Zeitpunkt erfolgen kann, bei dem noch Phosgen im Reaktionssystem vorhanden ist. Somit kann der Kettenabbrecher zu einem sehr frühen Zeitpunkt ins Reaktionssystem eingebracht werden. Dabei bedeutet "sehr früh", dass nur Oligomere Verbindungen aus der Reaktion mindestens eines Dihydroxydiarylalkans mit dem Phosgen vorliegen, welche im Mittel einen Polymerisationsgrad von mindestens einer Einheit und höchstens fünf sechs Einheiten aufweisen. Überraschenderweise weist das resultierende Polycarbonat einen geringen Anteil an Di-Kettenabbrechercarbonat auf, obwohl der Kettenabbrecher in ein System eingeführt wird, welches Phosgen enthält. Gleichzeitig weist das resultierende Polycarbonat eine enge Molekulargewichtsverteilung und damit einen niedrigen Oligomerenanteil auf. Daher weist das resultierenden Polycarbonat auch die bereits beschriebenen verbesserten Eigenschaften auf, welche aus einem geringen Anteil an Di-Kettenabbrechercarbonat und geringen Anteil an Oligomeren resultiert. Dabei ist das erfindungsgemäße Verfahren wirtschaftlicher und ökologischer als die im Stand der Technik beschriebenen Verfahren. Zum einen kann der Phosgenüberschuss mit dem erfindungsgemäßen Verfahren reduziert werden. Ebenso kann die benötigte Menge an Kettenabbrecher reduziert werden, da weniger Verlust durch die Bildung von Di-Kettenabbrechercarbonat resultiert.

Gemäß der vorliegenden Erfindung wird daher ein Verfahren zur Herstellung von Polycarbonat nach dem Phasengrenzflächenverfahren aus mindestens einem Dihydroxydiarylalkan, Phosgen, mindestens einem Katalysator und mindestens einem Kettenabbrecher bereitgestellt, umfassend die Schritte
(a) Erzeugung einer Dispersion aus einer organischen und einer wässrigen Phase, indem in einem Dispergator kontinuierlich die organische Phase in die wässrige Phase oder die wässrige Phase in die organische Phase dispergiert wird, wobei die organische Phase wenigstens ein für das Polycarbonat geeignetes Lösungsmittel und zumindest einen Teil des Phosgens enthält und die wässrige Phase das mindestens eine Dihydroxydiarylalkan, Wasser und 1,8 Mol bis 2,2 Mol, bevorzugt 1,95 Mol bis 2,05 Alkalilauge pro Mol Dihydroxydiarylalkan enthält,
(b) Zugabe mindestens eines Kettenabbrechers zur Dispersion aus Schritt (a) und (c) Zugabe mindestens eines Katalysators zur aus Schritt (b) erhaltenen Mischung,
welches dadurch gekennzeichnet ist, dass
der Energieeintrag durch den Dispergator in Schritt (a) 2,5 ^{∗} e⁶ W/m³ bis 5,0 ^{∗} e⁷ W/m³, bevorzugt 3,0 ^{∗} e⁶ W/m³ bis 4,0 ^{∗} e⁷ W/m³, besonders bevorzugt von 1,0 ^{∗} e⁷ W/m³ bis 3,5 ^{∗} e⁷ W/m³ beträgt.

Der Fachmann ist in der Lage, auf Basis der Dichte einer PC-Lösung bei 25 °C von 1,22 g/cm³ J/kg in W/m³ umzurechnen. Dem Fachmann sind die Begriffe Homogenisierung und Dispergierung bekannt. Bevorzugt wird unter dem Begriff "Homogenisierung" verstanden, dass ein Zustand angestrebt, bevorzugt erhalten wird, in dem die Konzentrationen der einzelnen Komponenten der Zusammensetzung innerhalb eines beliebigen Volumenelementes der wässrigen oder aber der organischen Phase im Wesentlichen gleich ist. Bevorzugt wird hier unter dem Begriff "im Wesentlichen" eine Abweichung der Konzentration der einzelnen Komponenten der Zusammensetzung eines beliebigen Volumenelementes von höchstens 5 %, bevorzugt höchstens 3 % und besonders bevorzugt höchstens 1 % verstanden. Dabei ist es bei der Homogenisierung im Gegensatz zur Dispergierung weiterhin bevorzugt, dass die Phasengrenzfläche zwischen der wässrigen und organischen Phase möglichst gering ist. Ebenso bevorzugt wird unter dem Begriff "Dispergierung" die Bildung einer Emulsion, bevorzugt ohne die Anwesenheit eines Emulgators, aus der wässrigen und der organischen Phase verstanden, wobei die wässrige und organische Phase noch die weiteren Komponenten zur Herstellung des Polycarbonats enthalten können. Beispiele für eine solche Emulsion sind die Öl-in-Wasser- oder die Wasser-in-Öl-Dispersion. Damit unterscheidet sich eine Homogenisierung von einer Dispergierung bevorzugt darin, dass bei der Homogenisierung kein Konzentrationsgradient irgendeiner gelösten Substanz innerhalb einer der Phase vorliegt und dabei eine möglichst geringe Phasengrenzfläche zwischen den Phasen vorliegt.

Es hat sich erfindungsgemäß herausgestellt, dass nur in bestimmten Bereichen des Energieeintrags der Phosgenüberschuss erfolgreich weiter reduziert werden kann. Dabei ist der Fachmann in der Lage, einen entsprechenden Energieeintrag zu berechnen, wenn ein Reaktor vorgegeben ist.

Erfindungsgemäß sind die angegebenen Energieeinträge Mittelwerte. Dies bedeutet, dass höhere Werte oder auch niedrigere Werte des Energieeintrags bevorzugt nicht ausgeschlossen sind. Diese können auch gegebenenfalls nur kurzzeitig auftreten. Erfindungsgemäß werden die Mittelwerte bevorzugt über ein gesamtes Reaktorsystem gebildet. Daher wird der Energieeintrag an entsprechenden Randzonen oder auch Einbauten mit eingerechnet.

Bei der Dispergierung der organischen Phase in die wässrige Phase oder der wässrigen Phase in die organische Phase mittels Dispergator, kann eine Öl-in-Wasser- (ow) oder eine Wasser-in-Öl-Dispersion (wo) erzeugt werden, wobei unter Öl die organische Phase zu verstehen ist. Es ist jedoch erfindungsgemäß bevorzugt, dass in Verfahrensschritt (a) eine Wasser-in-Öl-Dispersion erzeugt wird. Dies hat sich als vorteilhaft herausgestellt für einen geringen Gehalt an Oligomeren und Di-Kettenabbrechercarbonat im Polycarbonat. Vorzugsweise wird mittels des Dispergators kontinuierlich die organische Phase in die wässrige Phase dispergiert.

Definitionsgemäß handelt es sich bei einer Öl-in-Wasser-Dispersion um eine solche, bei der Wasser die äußere (kontinuierliche) und Öl die innere (dispergierte) Phase bildet, d.h. Öltröpfchen in Wasser verteilt sind. Bei einer Wasser-in-Öl-Dispersion handelt es sich folglich um eine solche, bei der Öl die äußere und Wasser die innere Phase bildet.

Es ist bevorzugt, dass das erfindungsgemäße Verfahren dadurch gekennzeichnet ist, dass das Verfahren den Schritt der mindestens einmaligen Zugabe einer Alkalilauge umfasst. Hierbei ist mit dem Ausdruck "Zugabe" ein aktiver Schritt der zusätzlichen Zugabe gemeint. Insbesondere kann es auch möglich sein, das mindestens eine Dihydroxyarylalkan zunächst in einer Alkalilauge zu lösen, bevor es dem Reaktionssystem zugeführt wird. Ein solcher anfänglicher Schritt ist erfindungsgemäß nicht die Zugabe einer Alkalilauge. Jedoch ist es des Weiteren bevorzugt, dass nach diesem anfänglichen Schritt des Lösens des mindestens einen Dihydroxyarylalkans jegliche Zugabe einer Alkalilauge (ob mit dem mindestens einen Dihydroxyarylalkan oder nicht) als eine Zugabe einer Alkalilauge verstanden wird.

Dieser Schritt der Zugabe einer Alkalilauge ist eine exotherme Reaktion. Er wird erfindungsgemäß bevorzugt in einem Temperaturbereich von -5° C bis 100° C, besonders bevorzugt 15°C bis 80°C, ganz besonders bevorzugt 25 bis 65°C durchgeführt, wobei je nach Lösungsmittel oder Lösungsmittelgemisch gegebenenfalls unter Überdruck gearbeitet werden muss. Je nach verwendetem Reaktor kann bei unterschiedlichen Drücken gearbeitet werden. Beispielsweise kann bevorzugt bei einem Druck von 0,5 bis 20 bar (absolut) gearbeitet werden.

Dabei hat es sich als besonders vorteilhaft herausgestellt, wenn das erfindungsgemäße Verfahren, dadurch gekennzeichnet ist, dass die Zugabe des mindestens einen Kettenabbrechers zum Reaktionssystem des Verfahrensschritts (b) zeitlich vor der ersten der mindestens einmaligen Zugabe der Alkalilauge erfolgt.

Dabei ist dem Fachmann zunächst klar, dass zwar grundsätzlich vor Zugabe des mindestens einen Kettenabbrechers Alkalilauge zugegeben werden kann. Jedoch hat sich erfindungsgemäß herausgestellt, dass diese Menge nicht zu hoch sein darf, da ansonsten der Polymerisationsgrad des Reaktionsproduktes R zu hoch wird. Dies bedeutet, dass der Fachmann vor Zugabe des mindestens einen Kettenabbrechers nur so viel Alkalilauge zugegeben kann, so lang garantiert ist, dass die erfindungsgemäßen Bevorzugungen in Bezug auf das Reaktionsprodukt R eingehalten werden.

Das erfindungsgemäße Verfahren kann genutzt werden, um den Phosgenüberschuss zu reduzieren. Dabei ist es bevorzugt, dass in Verfahrensschritt (a) ein Überschuss an Phosgen gegenüber der Summe der eingesetzten Dihydroxydiarylalkane von 3 bis 20 mol-%, bevorzugt 4 bis 10 mol-%, besonders bevorzugt von 5 bis 9 mol-%, ganz besonders bevorzugt von 6 bis 8 mol-% vorliegt. Erfindungsgemäß werden hier mol-% wie folgt berechnet: mol Phosgen/(mol Summe aller phenolischen OH-Gruppen/2). Dabei setzt sich die Summe aller phenolischen Gruppen beispielsweise aus dem Dihydroxydiarylalkan mit 2 OH Gruppen, dem Kettenabbrecher mit 1 OH Gruppe und/oder ggf. Verzweiger mit beispielsweise 3 OH Gruppe zusammen.

Wie bereits oben beschrieben, wird erfindungsgemäß das Vorhandensein einer Alkalilauge in Schritt (a) bevorzugt nicht als Zugabe einer Alkalilauge verstanden. Es handelt sich hierbei um die Alkalilauge, bevorzugt Natronlauge, die zur Lösung des BPA in der wässrigen Phase eingesetzt wird. Während der Phosgenierungsschritts (a) wird vorzugsweise möglichst wenig freie Alkalilauge zur Verfügung gestellt, um eine Verseifung des Phosgens zu Natriumcarbonat (d.h. einen Verlust an Phosgen) zu vermeiden. Erfindungsgemäß wird daher in Schritt (a) 1,80 Mol bis 2,20 Mol, bevorzugt 1.95 Mol -2.05 Mol Alkalilauge pro Mol Dihydroxydiarylalkan eingesetzt.

Die organische Phase umfasst ein oder mehrere Lösungsmittel.

Geeignete Lösungsmittel sind aromatische und/oder aliphatische chlorierte Kohlenwasserstoffe, bevorzugt Dichlormethan, Trichlorethylen, 1,1,1-Trichlorethan, 1,1,2-Trichlorethan und Chlorbenzol und deren Gemische. Es können jedoch auch aromatische Kohlenwasserstoffe wie Benzol, Toluol, m-/p-/o-Xylol oder aromatische Ether wie Anisol allein, im Gemisch oder zusätzlich oder im Gemisch mit chlorierten Kohlenwasserstoffen verwendet werden, bevorzugt sind Dichlormethan und Chlorbenzol und deren Gemische. Eine andere Ausführungsform des erfindungsgemäßen Verfahrens verwendet Lösungsmittel, welche Polycarbonat nicht lösen, sondern nur anquellen. Es können daher auch Nichtlösungsmittel für Polycarbonat in Kombination mit Lösungsmitteln verwendet werden. Wobei dann als Lösungsmittel auch in der wässrigen Phase lösliche Lösungsmittel wie Tetrahydrofuran, 1,3- oder 1,4-Dioxan oder 1,3-Dioxolan verwendet werden können, wenn der Lösungsmittelpartner die zweite organische Phase bildet.

Geeignete Dihydroxydiarylalkane - vorangehend und im Folgenden unter anderem auch als Diphenol bezeichnet - sind solche der allgemeinen Formel,

HO-Z-OH

worin Z ein divalenter organi¬scher Rest mit 6 bis 30 Kohlenstoffatomen ist, der eine oder mehrere aroma¬tische Gruppen enthält. Beispiele solcher Verbindungen, die in das erfindungsgemäße Verfahren eingesetzt werden können sind Dihydroxydiarylalkane wie Hydrochinon, Resorcin, Dihydroxydiphenyl, Bis-(hydroxyphenyl)-alkane, Bis¬(hydroxyphenyl)-cycloalkane, Bis-(hydroxyphenyl)-sulfide, Bis-(hydroxyphenyl)-ether, Bis-(hydroxy-phenyl)-ketone, Bis-(hydroxyphenyl)-sulfone, Bis-(hydroxyphenyl)-sulfoxide, 4,4'-Bis-(hydroxyphenyl)-diisopropylbenzole, sowie deren alkylierte, kernalkylierte und kernhalogenierte Verbindungen.

Bevorzugte Dihydroxydiarylalkane sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxy¬phenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexyn und 1,1-Bis-(4-hydroxyphenyl)-3,3,5-trimethyl¬cyclohexan (Bisphenol TMC).

Besonders bevorzugte Dihydroxydiarylalkane sind 4,4'-Dihydroxydiphenyl, 1,1-Bis-(4-hydroxyphenyl)-phenyl-ethan, 2,2-Bis-(4-hydroxyphenyl)-propan (Bisphenol A (BPA)), 2,2-Bis(3,5-dimethyl-4-hydroxyphenyl)-propan, 1, 1 -Bis-(4-hydroxy¬phenyl)-cyclohexan und 1,1-Bis-(4-hydroxyphenyl)-3,3,5-trimethylcyclohexan (Bis¬phenol TMC).

Diese und weitere geeignete Dihydroxydiarylalkane sind z.B. in den US-A 2 999 835, US-A 3,148,172 US-A 2,991,273, US-A 3 271 367, US-A 4,982,014 und US-A 2,999,846 in den deutschen Offenlegungsschriften DE-A 1 570 703, DE-A 2 063 050, DE-A 2 036 052, DE-A 2 211 956 und DE-A 3 832 396, der französischen Patentschrift FR-A 1 561 518, in der Monographie von H. Schnell, Chemistry and Physics of Polycarbonates, Interscience Publishers, New York 1964, S. 28ff; S.102ff und von D.G. Legrand, J.T. Bendler, Handbook of Polycarbonate Science and Technology, Marcel Dekker New York 2000, S. 72ff. beschrieben.

Erfindungsgemäß werden unter Polycarbonaten sowohl Homopolycarbonate als auch Copolycarbonate verstanden. Im Falle der erfindungsgemäßen Herstellung von Homopolycarbonaten wird nur ein Dihydroxydiarylalkan eingesetzt, im Falle der erfindungsgemäßen Herstellung von Copolycarbonaten werden mehrere Dihydroxydiarylalkane eingesetzt, wobei selbstverständlich die verwendeten Dihydroxydiarylalkane, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Unter Alkalilauge ist im Rahmen der Erfindung bevorzugt Natronlauge, Kalilauge oder Mischungen aus diesen, besonders bevorzugt Natronlauge zu verstehen.

Die wässrige Phase in dem Phasengrenzflächenverfahren zur Herstellung des Polycarbonats enthält Alkalilauge, ein oder mehrere Dihydroxydiarylalkane und Wasser, wobei die Konzentration dieser wässrigen Lösung bezüglich der Summe der Dihydroxydiarylalkane, nicht als Alkalisalz sondern als freies Dihydroxydiarylalkan gerechnet, bevorzugt zwischen 1 und 30 Gew.-%, besonders bevorzugt zwischen 3 und 25 Gew.-%, ganz besonders bevorzugt 15 bis 18 Gew.-%, bezogen auf das Gesamtgewicht der wässrigen Phase, beträgt. Das zur Lösung der Dihydroxydiarylalkane verwendete Alkalihydroxid, z.B. Natrium- oder Kaliumhydroxid, kann fest oder als entsprechende wässrige Alkalilauge verwendet werden. Die Konzentration der Alkalilauge richtet sich nach der Zielkonzentration der angestrebten Dihydroxydiarylalkanlösung, liegt aber in der Regel zwischen 5 und 25 Gew.-%, bevorzugt 5 und 10 Gew.-% bezogen auf 100 %ige Alkalilauge, oder aber wird konzentrierter gewählt und anschließend mit Wasser verdünnt. Bei dem Verfahren mit anschließender Verdünnung werden Alkalilaugen mit Konzentrationen zwischen 15 und 75 Gew.-%, bevorzugt 25 und 55 Gew.-%, gegebenenfalls temperiert, verwendet. Der Alkaligehalt pro mol Dihydroxydiarylalkan ist von der Struktur des Dihydroxydiarylalkans abhängig, bewegt sich aber in der Regel von 1,5 mol Alkali / mol Dihydroxydiarylalkan bis 2,5 mol Alkali / mol Dihydroxydiarylalkan, bevorzugt von 1,8 bis 2,2 Mol Alkali / mol Dihydroxydiarylalkane und im besonders bevorzugten Fall, dass Bisphenol A als alleiniges Dihydroxydiarylalkan verwendet wird, von 1,85 bis 2,15 mol Alkali, ganz besonders bevorzugt 2,00 mol Alkali. Wird mehr als ein Dihydroxydiarylalkan verwendet, so können diese zusammen gelöst werden. Da die Löslichkeit von Dihydroxydiarylalkanen sehr stark von der verwendeten Alkalimenge abhängt, kann es jedoch vorteilhaft sein, statt einer Lösung mit zwei Dihydroxydiarylalkanen besser zwei Lösungen mit je einem in einer geeigneten Alkalilauge gelösten Dihydroxydiarylalkan zu haben, die dann getrennt so dosiert werden, dass das richtige Mischungsverhältnis entsteht. Weiterhin kann es von Vorteil sein, das oder die Dihydroxydiarylalkan(e) nicht in Alkalilauge sondern in mit zusätzlichem Alkali ausgestatteter, verdünnter Dihydroxydiarylalkanelösung zu lösen. Die Lösevorgänge können von festem Dihydroxydiarylalkane, meist in Schuppen oder Prillform oder auch von geschmolzenem Dihydroxydiarylalkane ausgehen. Das eingesetzte Alkalihydroxid bzw. die Alkalilauge kann im Falle von Natriumhydroxid bzw. Natronlauge beispielsweise nach dem Amalgamverfahren oder dem sogenannten Membranverfahren hergestellt worden sein. Beide Verfahren werden seit langer Zeit benutzt und sind dem Fachmann geläufig. Bevorzugt wird im Falle von Natronlauge solche hergestellt nach dem Membranverfahren verwendet.

In einer solchen wässrigen Lösung und/oder der wässrigen Phase liegen das oder die Dihydroxydiarylalkan(e) ganz oder teilweise in Form der entsprechenden Alkalisalze bzw. Dialkalisalze vor.

Eine gegebenenfalls praktizierte Dosierung von Dihydroxydiarylalkan(en) nach oder während der Phosgeneinleitung kann so lange durchgeführt werden, wie Phosgen oder dessen unmittelbare Folgeprodukte, die Chlorkohlensäureester in der Reaktionslösung vorhanden sind.

Die organische Phase des Schritts (a) umfasst neben dem mindestens einen Lösungsmittel zusätzlich zumindest Phosgen. Dabei umfasst die organische Phase das erforderliche Phosgen vor der Erzeugung der Mischung bereits ganz oder teilweise. Bevorzugt enthält die organische Phase vor der Erzeugung der Mischung bereits das gesamte erforderliche Phosgen inklusive des verwendeten Phosgenüberschusses. Der Eintrag des Phosgens in die organische Phase kann gasförmig oder flüssig erfolgen.

Die Zugabe mindestens eines Kettenabbrechers zum Reaktionssystem des Schritts (a) erfolgt in Schritt (b). Dabei umfasst das Reaktionssystem des Schritts (a) bevorzugt noch nicht umgesetztes Phosgen. Der mindestens eine Kettenabbrecher ist in der Regel monofunktionell. Bevorzugt wird der mindestens eine Kettenabbrecher ausgewählt aus der Gruppe, bestehend aus Phenol, Alkylphenolen und deren Chlorkohlensäureester oder Säurechloride von Monocarbonsäuren, bevorzugt aus Phenol, tert-Butylphenol und iso-Octylphenol, Cumylphenol. Dabei können beliebige Gemische der genannten Kettenabbrecher eingesetzt werden.

In einer besonders bevorzugten Ausführungsform des erfindungsgemäßen Verfahrens wird Phenol als Kettenabbrecher eingesetzt. Vorzugsweise wird das Phenol in Schritt (b) in Form einer Lösung umfassend wenigstens ein organisches Lösungsmittel und das Phenol in einer Konzentration von 5 bis 40 Gew.-%, bevorzugt 10 bis 25 Gew.-%, eingesetzt. In dieser Ausführungsform wird die wässrige Phase am Ende der Reaktion (d.h. in Schritt (b)) vorzugsweise auf einen pH Wert von 11,3 bis 11,6 eingestellt. Vorzugsweise erfolgen die Zugabe des Phenols und die Einstellung des pH-Werts auf 11,3 bis 11,6 vor Zugabe des Katalysators.

In einer anderen bevorzugten Ausführungsform des erfindungsgemäßen Verfahrens wird p-tert-Butylphenol als Kettenabbrecher eingesetzt. Vorzugsweise wird das p-tert-Butylphenol in Schritt (b) in Form einer Lösung umfassend wenigstens ein organisches Lösungsmittel und das p-tert-Butylphenol in einer Konzentration von 2 bis 25 Gew.-%, bevorzugt 3 bis 15 Gew.-%, eingesetzt. In dieser Ausführungsform wird die wässrige Phase am Ende der Reaktion (d.h. in Schritt (b)) vorzugsweise auf einen pH Wert von 11,5 bis 11,8 eingestellt. Vorzugsweise erfolgen die Zugabe des p-tert-Butylphenols und die Einstellung des pH-Werts auf 11,5 bis 11,8 vor Zugabe des Katalysators.

In Schritt (b) können gegebenenfalls ein oder mehrere Verzweiger oder Verzweigermischungen der Synthese zugesetzt werden. Bevorzugt werden solche Verzweiger jedoch vor dem oder den Kettenabbrecher(n) zugesetzt. Ganz besonders bevorzugt werden solche Verzweiger in Verfahrensschritt (a) mit der wässrigen Phase gemeinsam mit der Lösung des mindestens einen Dihydroxydiarylalkans hinzugefügt. Beispielsweise werden als Verzweiger Trisphenole, Quarterphenole, Säurechloride von Tri- oder Tetracarbonsäuren oder auch Gemische der Polyphenole oder der Säurechloride verwendet.

Beispiele für als Verzweiger geeignete Verbindungen mit drei oder mehr als drei phenolischen Hydroxylgruppen sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Beispiele für sonstige als Verzweiger geeignete trifunktionelle Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Besonders bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Es hat sich als vorteilhaft herausgestellt, wenn die mindestens eine Zugabe der Alkalilauge erfolgt, wenn die Dispersion immer noch eine Öl-in-Wasser-Dispersion ist. Die Zugabe von Alkalilauge, welche wässrig ist, zu einer Wasser-in-Öl-Emulsion resultiert in der Regel in einer nicht idealen Molekulargewichtsverteilung. Da der mindestens eine Kettenabbrecher bevorzugt vorher zugegeben wird, bedeutet dies auch, dass bevorzugt auch der mindestens eine Kettenabbrecher zu einer Öl-inWasser-Dispersion zugegeben wird. Erfindungsgemäß ist es möglich, dass während des Verfahrens die Dispersion von Wasser-in-Öl- in eine Öl-in-Wasser-Dispersion umschlägt.

Des Weiteren umfasst das erfindungsgemäße Verfahren den Schritt
(c) Zugabe mindestens eines Katalysators zur aus Schritt (b) erhaltenen Mischung.

Dabei ist es bevorzugt, dass der mindestens eine Katalysator ausgewählt wird aus der Gruppe, bestehend aus einem tertiären Amin, einem Organophosphin und beliebigen Mischungen. Ganz besonders bevorzugt ist der mindestens eine Katalysator ein tertiäres Amin oder eine Mischung aus mindestens zwei tertiären Aminen.

Bei tertiären Aminen handelt es sich ebenso bevorzugt um Triethylamin, Tributylamin, Trioctylamin, N-Ethylpiperidin, N-Methylpiperidin oder N-i/n-Propylpiperidin, Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung. Die Dosierung des Katalysators oder der Katalysatoren kann in Substanz, in einem inerten Lösungsmittel, vorzugsweise dem oder einem derer der organischen Phase bei der Polycarbonatsynthese, oder auch als wässrige Lösung erfolgen. Im Falle der Verwendung von tertiären Aminen als Katalysator kann beispielsweise deren Dosierung in wässriger Lösung als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt vorzugsweise zwischen 0,001 bis 10 Mol %, bevorzugt 0,01 bis 8 Mol %, besonders bevorzugt 0,05 bis 5 Mol % bezogen auf Mole eingesetzte Dihydroxydiarylalkane.

Grundsätzlich sind Dispergatoren dem Fachmann bekannt. Erfindungsgemäß ist es bevorzugt, dass als Dispergator in Verfahrensschritt (a) mindestens eine Düse, Rohrblende, ein statischer Mischer, Pumpe und/oder ein Strahldispergator verwendet wird.. Dabei sind insbesondere solche Strahldispergatoren bevorzugt, die eine Vorzugsrichtung der Dosierung gestatten. Im Rahmen der Erfindung geeignete Dispergatoren sind beispielsweise in EP-A 1 368 407 und EP-A 1 599 520 beschrieben.

Als Düsen kommen beispielsweise Spaltdüsen, Ringschlitzdüsen, Lochdüsen, Lefosdüsen oder Glattstrahldüsen in Frage. Dabei kann der Fachmann die Öffnung der Düse mit Hilfe seines Fachwissens so wählen, dass die erfindungsgemäßen Energieeinträge resultieren.

Der anzuwendende Druck kann vorzugsweise 0.001 bis 1 MPa, besonders bevorzugt 0,001 bis 0,5 MPa betragen.

In bevorzugten Ausführungsformen des erfindungsgemäßen Verfahrens werden solche Dispergatoren verwendet, worin die organische und die wässrige Phase vorzugsweise getrennt voneinander und/oder nur eine der Phasen durch jeweils eine Pumpe einem Vordispergator zugeführt werden. Vorzugsweise beträgt der Druck dieser Pumpen jeweils maximal 2,5 MPa, vorzugsweise von 0,001 bis 0,5 MPa. Durch den Vordispergator wird bevorzugt eine Wasser-in-Öl-Dispersion erzeugt.

Als Vordispergator eignen sich alle beliebigen Düsen, wie z.B. Spaltdüsen, Ringschlitzdüsen, Lochdüsen, Lefosdüsen oder Glattstrahldüsen sowie Strahldispergatoren. Als Homogenisierdüsen eignen sich ebenfalls alle beliebigen Düsen, wie z.B. Spaltdüsen, Ringschlitzdüsen, Lochdüsen, Lefosdüsen oder Glattstrahldüsen sowie Strahldispergatoren.

In einer weiteren bevorzugten Ausführungsform können rotierende Dispergatoren wie in EP B1 2090605 beschrieben verwendet werden. Dem Vordispergator folgt dann der erfindungsgemäß eingesetzte Dispergator. Hier erfolgt der erfindugsgemäß definierte Energieeintrag.

Die Durchführung des erfindungsgemäßen Verfahrens erfolgt kontinuierlich. Die gesamte Reaktion, d.h. Umsetzung und weitere Aufkondensation, kann daher in Rührkesseln, Rohrreaktoren, Umpumpreaktoren oder Rührkesselkaskaden oder deren Kombinationen erfolgen, wobei durch Verwendung der bereits erwähnten Mischorgane sicherzustellen ist, dass wässrige und organische Phase sich möglichst erst dann entmischen, wenn das Synthesegemisch ausreagiert hat, d.h. kein verseifbares Chlor von Phosgen oder Chlorkohlensäureestern mehr enthalten ist. In einer bevorzugten Ausführungsform des erfindungsgemäßen Verfahrens folgt dem Dispergator in Verfahrensschritt (a) ein Strömungsrohr. In einer solchen Anordnung lässt sich besonders vorteilhaft eine extrem kurze Verweilzeit von weniger als 0,5 s der durchgeführten Mischung realisieren. In einer weiteren bevorzugten Ausführungsform des erfindungsgemäßen Verfahrens folgt dann ein Umpumpreaktor.

Vorzugsweise wird als Umpumpreaktor ein Tankreaktor mit Umpumpschleife und einer Umpumprate von 5 bis 15 mal, vorzugsweise 7,5 bis 10 mal der Durchströmungsmenge eingesetzt. Vorzugswiese beträgt die Verweilzeit der Reaktionsmischung in diesem Reaktor 2 bis 20 Minuten, besonders bevorzugt 2 bis 5 Minuten.

In einer weiteren bevorzugten Ausführungsform des erfindungsgemäßen Verfahrens wird der Umpumpreaktor gefolgt von weiteren Verweilreaktoren. Vorzugsweise beträgt die Verweilzeit der Reaktionsmischung in dem Umpumpreaktor und den Verweilreaktoren jeweils 2 bis 20 Minuten.

In einem bevorzugten Aspekt der Erfindung ist das erfindungsgemäße kontinuierliche Verfahren in sämtlichen oben beschriebenen Ausführungsformen und Bevorzugungen, dadurch gekennzeichnet, dass der mindestens eine Kettenabbrecher in Verfahrensschritt (b) zu einem Zeitpunkt in das Reaktionssystem, umfassend zumindest das mindestens eine Dihydroxydiarylalkan, Phosgen und das Reaktionsprodukt R aus dem mindestens einen Dihydroxydiarylalkan und Phosgen, eingetragen wird, bei dem das Reaktionsprodukt R eine Mischung aus Verbindungen darstellt und diese Verbindungen im Mittel einen Polymerisationsgrad von mindestens einer Einheit und höchstens sechs Einheiten aufweisen, welche aus dem mindestens einen Dihydroxydiarylalkan durch die Reaktion mit dem Phosgen entstanden sind.Dabei umfasst das Reaktionssystem zum Zugabezeitpunkt des mindestens einen Kettenabbrechers zumindest das mindestens eine Diydroxydiarylalkan, Phosgen und das Reaktionsprodukt R. Es kann auch zu diesem Zeitpunkt mindestens einen Katalysator enthalten. Dies ist jedoch nicht bevorzugt. Bevorzugt umfasst, ganz besonders bevorzugt besteht das Reaktionssystem zum Zugabezeitpunkt des mindestens einen Kettenabbrechers (aus) mindestens ein(em) Diydroxydiarylalkan, Phosgen, das/dem Reaktionsprodukt R und die für die Durchführung des Phasengrenzflächenverfahrens notwendigen Lösungsmittel. Dabei handelt es sich bevorzugt um eine wässrige Alkalilauge und mindestens ein organisches Lösungsmittel.

Wie bereits oben beschrieben, wird somit erfindungsgemäß bevorzugt der Kettenabbrecher "früh" in das Reaktionssystem eingetragen. Der Zeitpunkt wird erfindungsgemäß dadurch definiert, dass das Reaktionsprodukt R eine Mischung aus Verbindungen ist, wobei diese Verbindungen im Mittel einen Polymerisationsgrad von mindestens einer Einheit und höchstens sechs Einheiten aufweisen

Der Begriff "Polymerisationsgrad" ist dem Fachmann bekannt. Bevorzugt gibt der Polymerisationsgrad die Anzahl der Einheiten im oligomeren Reaktionsprodukt R an, welches aus dem mindestens einen Dihydroxydiarylalkan durch die Reaktion mit dem Phosgen entstanden sind. Bei der Angabe des Polymerisationsgrades handelt es sich um einen Mittelwert. Dies ergibt sich, da der Polymerisationsgrad bevorzugt über die zahlengemittelte Molmasse Mₙ ermittelt wird. Dabei wird der Quotient aus Mₙ des Oligomers/Polymers und der molaren Masse der Wiederholungseinheit (der Einheit, welche aus dem mindestens einen Dihydroxydiarylalkan durch die Reaktion mit dem Phosgen entstanden ist; bevorzugt die Einheit, welche durch die allgemeine chemische Formel (I) dargestellt wird) gebildet. Die zahlengemittelte Molmasse Mₙ wiederum wird erfindungsgemäß bevorzugt über Gelpermeationschromatographie (GPC) bestimmt. Besonders bevorzugt wird dies mittels GPC nach DIN 55672-1:2016-03, kalibriert gegen Bisphenol A-Polycarbonat Standards mit Dichlormethan als Elutionsmittel bestimmt. Ganz besonders bevorzugt werden erfindungsgemäß die Molekulargewichte Mw (Gewichtsmittel), Mn (Zahlenmittel) und Mv (Viskositätsmittel) mittels Gelpermeationschromotographie in Anlehnung an DIN 55672-1:2007-08 unter Verwendung einer BPA-Polycarbonat-Kalibrierung bestimmt. Die Kalibrierung erfolgte mit linearen Polycarbonaten bekannter Molmassenverteilung (z. B. von PSS Polymer Standards Service GmbH, Deutschland). Dabei wurde die Methode 2301-0257502-09D (aus dem Jahre 2009 in deutscher Sprache) der Currenta GmbH & Co. OHG, Leverkusen angewandt. Dichlormethan wurde als Elutionsmittel verwendet. Die Säulenkombination bestand aus vernetzten Styrol-Divinylbenzolharzen. Die GPC kann eine oder mehrere hintereinander geschaltete handelsübliche GPC-Säulen zur Größenausschluss-Chromatographie umfassen, die so ausgewählt sind, dass eine hinreichende Trennung der Molmassen von Polymeren, insbesondere von aromatischen Polycarbonaten mit gewichtsmittleren Molmassen Mw von 2.000 bis 100.000 g/mol möglich ist. Typischerweise haben die analytischen Säulen einen Durchmesser von 7,5 mm und eine Länge von 300 mm. Die Partikelgrößen des Säulenmaterials liegen im Bereich von 3 µm bis 20 µm. Die Konzentration der untersuchten Lösungen betrug 0,2 Gew./%. Die Flussrate wurde auf 1,0 ml/min eingestellt, die Temperatur der Lösung betrug 30°C. Die Detektion erfolgte mit Hilfe eines Brechungsindex (RI) Detektors.

Bevorzugt ist das erfindungsgemäße Verfahren des Weiteren dadurch gekennzeichnet, dass die Verbindungen der Mischung des Reaktionsprodukts R durch die allgemeine chemische Formel (I) dargestellt werden: 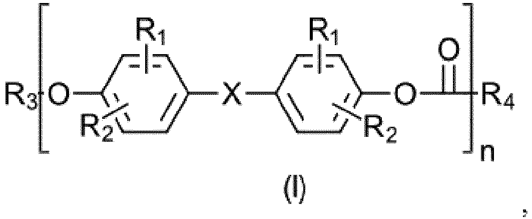 in der
- R₁ und R₂: jeweils unabhängig voneinander für H, C1- bis C18-Alkyl-, C1- bis C18-Alkoxy, Halogen wie C1 oder Br oder für jeweils gegebenenfalls substituiertes Aryl- oder Aralkyl, bevorzugt für H oder C1 bis C12 Alkyl, besonders bevorzugt für H oder C1-bis C8-Alkyl und ganz besonders bevorzugt für H oder Methyl stehen,
- R₃: für H, (C=O)-Cl oder (C=O)-OH steht,
- R₄: für OH oder C1 steht,
- X: für eine Einfachbindung, -SO₂-, -CO-, -O-, -S-, C1- bis C6-Alkylen, C2- bis C5-Alkyliden oder C5- bis C6-Cycloalkyliden, welches mit C1- bis C6-Alkyl, vorzugsweise Methyl oder Ethyl, substituiert sein kann, ferner für C6- bis C12-Arylen, welches gegebenenfalls mit weiteren Heteroatome enthaltenden aromatischen Ringen kondensiert sein kann, steht, und
- n: für den Polymerisationsgrad und damit die Anzahl der Einheiten, welche aus dem mindestens einen Dihydroxydiarylalkan durch die Reaktion mit dem Phosgen entstanden ist, steht und im Mittel einen Wert von 1 bis 6, bevorzugt 1 bis 5, besonders bevorzugt 1 bis 4, ganz besonders bevorzugt 1 bis 3 haben kann.

Dabei ist es erfindungsgemäß ebenfalls möglich, dass das Reaktionsprodukt R des Weiteren teilweise verseift vorliegen kann. Dabei spaltet sich das Chlor an der Cloroformatgruppe ab und es entsteht Carbonat. Diese Nebenreaktion ist jedoch erfindungsgemäß unerwünscht. Dies bedeutetet, dass das Reaktionsprodukt R eine Mischung ist, welche ein solche verseiftes Produkt umfasst. Allerdings ist dies weniger bevorzugt. Bevorzugt werden die Verbindungen der Mischung des Reaktionsprodukts R durch die allgemeine chemische Formel (I) dargestellt, in der
- R₁ und R₂: jeweils unabhängig voneinander für H oder C1 bis C12 Alkyl, besonders bevorzugt für H oder C1- bis C8-Alkyl und ganz besonders bevorzugt für H oder Methyl stehen,
- R₃: für H oder (C=O)-Cl steht,
- R₄: für C1 steht,
- X: für eine Einfachbindung, C1- bis C6-Alkylen, C2- bis C5-Alkyliden oder C5- bis C6-Cycloalkyliden, welches mit Methyl oder Ethyl substituiert sein kann, steht, und
- n: für den Polymerisationsgrad und damit die Anzahl der Einheiten, welche aus dem mindestens einen Dihydroxydiarylalkan durch die Reaktion mit dem Phosgen entstanden ist, steht und im Mittel einen Wert von 1 bis 6, bevorzugt 1 bis 5, besonders bevorzugt 1 bis 4, ganz besonders bevorzugt 1 bis 3 haben kann.

Ganz besonders bevorzugt werden die Verbindungen der Mischung des Reaktionsprodukts R durch die allgemeine chemische Formel (I) dargestellt, in der
- R₁ und R₂: jeweils unabhängig voneinander für H oder Methyl stehen,
- R₃: für H oder (C=O)-Cl steht,
- R₄: für OH steht,
- X: für Isopropyliden oder 3,3,5-Trimethylcyclohexylidene steht, und
- n: für den Polymerisationsgrad und damit die Anzahl der Einheiten, welche aus dem mindestens einen Dihydroxydiarylalkan durch die Reaktion mit dem Phosgen entstanden ist, steht und im Mittel einen Wert von 1 bis 6, bevorzugt 1 bis 5, besonders bevorzugt 1 bis 4, ganz besonders bevorzugt 1 bis 3 haben kann.

Wenn beim erfindungsgemäßen Verfahren Bisphenol A als Dihydroxydiarylalkan eingesetzt wird, so ergeben sich je nach Art der Endgruppe R₃ und/oder R₄ (OH oder Cl) der allgemeinen chemischen Formel (I) bevorzugte mittlere Molmassen Mn (Zahlenmittel) im Bereich von 352 g/mol ( ein BPA mit zwei Chlorkohlensäureesterendgruppen) bis 1623 g/mol (n = im Mittel ein Wert von 6). Insbesondere ist es hier bevorzugt, dass die Molmasse unterhalb von 1000 g/mol liegt.

Dabei hat es sich als vorteilhaft herausgestellt, wenn der mindestens eine Kettenabbrecher zunächst gut vermischt wird, bevor er reagieren kann. Dabei wird der mindestens eine Kettenabbrecher bevorzugt homogen verteilt. Dies kann beispielsweise durch die Verwendung eines Statikmischers nach Zugabe des mindestens einen Kettenabbrechers erfolgen, bevor er reagiert.

Ebenso wurde gefunden, dass es vorteilhaft ist, wenn der mindestens eine Kettenabbrecher als eine organische Phase und nicht als wässrige Phase dem Reaktionssystem zugeführt wird.

Es hat sich jedoch als vorteilhaft herausgestellt, wenn der mindestens eine Kettenabbrecher bei einem pH-Wert von 8-11, bevorzugt 9-10 zugegeben wird. Es hat sich gezeigt, dass bei höheren pH-Werten (>= 11) die Verteilung des mindestens einen Kettenabbrechers zwischen der organischen und wässrigen Phase unvorteilhaft wird. In diesem Fall wird ein großer Anteil in der wässrigen Phase gefunden, wo er nicht mit den Chloroformat-Endgruppen reagieren kann. Daher ist es erfindungsgemäß bevorzugt, dass im erfindungsgemäßen Verfahren keine Zugabe einer Alkalilauge vor Zugabe des mindestens einen Kettenabbrechers erfolgt. Dies ist besonders ausgeprägt, wenn der mindestens eine Kettenabbrecher Phenol umfasst. Aus diesem Grund ist es vorteilhaft, die Alkalilauge erst nach der Zugabe des mindestens einen Kettenabbrechers zuzugeben.

Das erfindungsgemäße Verfahren ermöglicht trotz des geringen Phosgenüberschusses eine gute Phasentrennung am Ende der Reaktion und sowohl einen geringen Wassergehalt in der organischen Phase als auch geringen Restmonomergehalt in der wässrigen Phase. Ferner wird der Einbau von Katalysatorbestandteilen in das Produkt vermieden.

Zur Aufarbeitung lässt man das ausreagierte, höchstens noch Spuren, bevorzugt weniger als 2 ppm an Chlorkohlensäureestern enthaltende, mindestens zweiphasige Reaktionsgemisch zur Phasentrennung absitzen. Die wässrige alkalische Phase wird gegebenenfalls ganz oder teilweise zurück in die Polycarbonatsynthese als wässrige Phase geleitet oder aber der Abwasseraufarbeitung zugeführt, wo Lösungsmittel- und Katalysatoranteile abgetrennt und gegebenenfalls in die Polycarbonatsynthese rückgeführt werden. In einer anderen Variante der Aufarbeitung wird nach Abtrennung der organischen Verunreinigungen, insbesondere Lösungsmitteln und Polymerresten, und gegebenenfalls nach der Einstellung eines bestimmten pH-Wertes, z.B. durch Natronlaugezugabe, das Salz abgetrennt, welches z. B. der Chloralkalielektrolyse zugeführt werden kann, während die wässrige Phase gegebenenfalls wieder der Polycarbonatsynthese zugeführt wird.

Die organische, das Polycarbonat enthaltende Phase kann anschließend zur Entfernung der Kontaminationen alkalischer, ionischer oder katalytischer Art auf verschiedene, dem Fachmann bekannte Weisen gereinigt werden.

Die organische Phase enthält in der Regel auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie des oder der Katalysator(en). Nach dieser groben Abtrennung der alkalischen, wässrigen Phase kann die organische Phase ein oder mehrmals mit verdünnten Säuren, Mineral-, Carbon- Hydroxycarbon-und/oder Sulfonsäuren gewaschen werden. Bevorzugt sind wässrige Mineralsäuren insbesondere Salzsäure, phosphorige Säure, Phosphorsäure oder Mischungen dieser Säuren. Die Konzentration dieser Säuren sollte dabei vorzugsweise im Bereich 0,001 bis 50 Gew. %, bevorzugt 0,01 bis 5 Gew. % liegen. Weiterhin kann die organische Phase mit entsalztem oder destilliertem Wasser wiederholt gewaschen werden. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen, wobei das Waschwasser zwischen den Waschschritten gegebenenfalls unter Verwendung von aktiven oder passiven Mischorganen zudosiert werden kann. Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas, Phosphorsäure oder phosphorige Säure verwendet, die gegebenenfalls auch als Mischungen eingesetzt werden können. Die so erhaltene gereinigte Polycarbonatlösung sollte vorzugsweise nach dem letzten Trennvorgang nicht mehr als 5 Gew. %, bevorzugt weniger als 1 Gew. %, ganz besonders bevorzugt weniger als 0,5 Gew. % Wasser enthalten.

Die Isolierung des Polycarbonats aus der Lösung kann durch Verdampfen des Lösungsmittels mittels Temperatur, Vakuum oder eines erhitzten Schleppgases erfolgen. Andere Isolierungsmethoden sind beispielsweise Kristallisation und Fällung.

Erfolgt die Konzentrierung der Polycarbonatlösung und eventuell auch die Isolierung des Polycarbonats durch Abdestillieren des Lösungsmittels, gegebenenfalls durch Überhitzung und Entspannung, so spricht man von einem "Flash-Verfahren". Ein solches Verfahren ist dem Fachmann bekannt und beispielsweise in "Thermische Trennverfahren", VCH Verlagsanstalt 1988, S. 114 beschrieben. Wird statt dessen ein geheiztes Trägergas zusammen mit der einzudampfenden Lösung versprüht, so spricht man von einer "Sprühverdampfung/Sprühtrocknung", welche beispielhaft in Vauck, "Grundoperationen chemischer Verfahrenstechnik", Deutscher Verlag für Grundstoffindustrie 2000, 11.Auflage, S. 690 beschrieben ist. Alle diese Verfahren sind in der Patentliteratur und in Lehrbüchern beschrieben und dem Fachmann geläufig.

Bei der Entfernung des Lösungsmittels durch Temperatur (Abdestillieren) bzw. dem technisch effektiveren Flash-Verfahren erhält man hochkonzentrierte Polycarbonatschmelzen. Beim Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschließend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen, sondern lieber ein zwei- bis vierstufiges Verfahren zu wählen.

Aus den so erhaltenen hochkonzentrierten Polycarbonatschmelzen können die Reste des Lösungsmittels entweder direkt aus der Schmelze mit Ausdampfextrudern (vgl. z.B. BE-A 866 991, EP-A 0 411 510, US-A 4 980 105, DE-A 33 32 065), Dünnschichtverdampfern (vgl. z.B. EP-A 0 267 025), Fallfilmverdampfern, Strangverdampfern, Schaumverdampfern (z.B. US 2012/015763 A1) oder durch Friktionskompaktierung (vgl. z.B. EP-A 0 460 450), gegebenenfalls auch unter Zusatz eines Schleppmittels, wie Stickstoff oder Kohlendioxid oder unter Verwendung von Vakuum (vgl. z.B. EP-A 0 039 96, EP-A 0 256 003, US-A 4 423 207), entfernt werden, alternativ auch durch anschließende Kristallisation (vgl. z.B. DE-A 34 29 960) und/oder Ausheizen der Reste des Lösungsmittels in der festen Phase (vgl. z.B. US-A 3 986 269, DE-A 20 53 876). Auch diese Verfahren und die hierzu erforderlichen Vorrichtungen sind in der Literatur beschrieben und dem Fachmann geläufig.

Polycarbonat-Granulate können - wenn möglich - durch direktes Abspinnen der Schmelze und anschließender Granulierung oder aber durch Verwendung von Austragsextrudern von denen in Luft oder unter Flüssigkeit, meist Wasser, abgesponnen wird, erhalten werden. Werden Extruder verwendet, so kann man der Polycarbonatschmelze vor dem Extruder, gegebenenfalls unter Einsatz von statischen Mischern oder durch Seitenextruder in diesem Extruder, Additive zusetzen.

Alternativ kann die Polycarbonatlösung einer Sprühverdampfung unterzogen werden. Bei einer Versprühung wird die Polycarbonatlösung gegebenenfalls nach Erhitzung entweder in ein Gefäß mit Unterdruck verdüst oder mittels einer Düse mit einem erhitzten Trägergas, z.B. Stickstoff, Argon oder Wasserdampf in ein Gefäß mit Normaldruck verdüst. In beiden Fällen erhält man in Abhängigkeit von der Konzentration der Polymerlösung Pulver (verdünnt) oder Flocken (konzentriert) des Polymers, aus dem gegebenenfalls auch die letzten Reste des Lösungsmittels wie oben entfernt werden müssen. Anschließend kann mittels eines Compoundierextruders und anschließender Abspinnung Granulat erhalten werden. Auch hier können Additive, wie oben beschrieben, in der Peripherie oder dem Extruder selbst, zugesetzt werden. Oftmals kann es erforderlich sein, vor der Extrusion aufgrund der geringen Schüttdichte der Pulver und Flocken einen Kompaktierungsschritt für das Polymerpulver zu durchlaufen.

Aus der gewaschenen und gegebenenfalls noch aufkonzentrierten Polycarbonatlösung kann durch Zugabe eines Nichtlösungsmittels für Polycarbonat das Polymer weitgehend ausgefällt werden. Die Nichtlösungsmittel wirken dabei als Fällungsmittel. Hierbei ist es vorteilhaft, erst eine geringe Menge des Nichtlösungsmittels zuzugeben und gegebenenfalls auch Wartezeiten zwischen den Zugaben der Chargen an Nichtlösungsmittel einzulegen. Es kann außerdem von Vorteil sein, verschiedene Nichtlösungsmittels einzusetzen. Verwendung als Fällungsmittel finden hier z.B. aliphatische oder cycloaliphatische Kohlenwasserstoffe, insbesondere Heptan, i-Octan oder Cyclohexan, Alkohole wie z.B. Methanol, Ethanol oder i-Propanol, Ketone, wie z.B. Aceton, oder Mischungen aus diesen. Bei der Fällung wird in der Regel die Polymerlösung langsam dem Fällungsmittel zugesetzt. Die so erhaltenen Polycarbonate werden wie bei der Sprühverdampfung beschrieben zu Granulat verarbeitet und gegebenenfalls additiviert.

Nach anderen Verfahren werden Fällungs- und Kristallisations-Produkte oder amorph erstarrte Produkte in feinkörniger Form durch Überleiten von Dämpfen eines oder mehrer Nichtlösungsmittel für Polycarbonat, unter gleichzeitiger Erhitzung unterhalb der Glastemperatur kristallisiert und weiter zu höheren Molekulargewichten aufkondensiert.

Handelt es sich dabei um Oligomere gegebenenfalls mit unterschiedlichen Endgruppen (Phenolische und Kettenabbrecherenden) so spricht man von Festphasenaufkondensation. Der Zusatz von Additiven dient der Verlängerung der Nutzungsdauer oder der Verbesserung der Farbstabilität (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen, zusammen oder in mehreren verschiedenen Mischungen der Polymerschmelze zugesetzt werden. Dies kann direkt bei der Isolierung des Polymeren oder aber nach Aufschmelzen von Granulat in einem sogenannten Compoundierungsschritt erfolgen. Dabei können die Additive beziehungsweise deren Mischungen als Feststoff, vorzugsweise als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Ein weiterer Aspekt der Erfindung betrifft eine Verwendung eines Energieeintrags von 2,5 ^{∗} e⁶ W/m³ bis 5,0 ^{∗} e⁷ W/m³, bevorzugt 3,0 ^{∗} e⁶ W/m³ bis 4,0 ^{∗} e⁷ W/m³, besonders bevorzugt von 1,0 ^{∗} e⁷ W/m³ bis 3,5 ^{∗} e⁷ W/m³ in ein System, umfassend eine organische Phase und eine wässrige Phase, wobei die organische Phase wenigstens ein für das Polycarbonat geeignetes Lösungsmittel und zumindest einen Teil des Phosgens und die wässrige Phase zumindest mindestens ein Dihydroxydiarylalkan, Wasser, 1,8 Mol bis 2,2 Mol, bevorzugt 1,95 Mol bis 2,05 Alkalilauge pro Mol Dihydroxydiarylalkan und gegebenenfalls mindestens einen Kettenabbrecher enthält zur Reduzierung des Phosgenüberschusses bei der Herstellung eines Polycarbonats nach dem Phasengrenzflächenverfahren. Wie bereits oben beschrieben, führt die Verwendung dieses speziellen Energieeintrags bevorzugt gleichzeitig auch zu einer Reduzierung des Oligomerenanteils im resultierenden Polycarbonat. Ebenso führt die Verwendung dieses speziellen Energieeintrags bevorzugt gleichzeitig auch zu einer Reduzierung des Gehalts an Di-Kettenabbrechercarbonat im resultierenden Polycarbonat.

Dabei ist es des Weiteren bevorzugt, dass der Energieeintrag durch einen Dispergator erfolgt. Geeignete Dispergatoren wurden bereits oben beschrieben. Ebenso ist es bevorzugt, dass das Verfahren zur Herstellung von Polycarbonat nach dem Phasengrenzflächenverfahren kontinuierlich durchgeführt wird. Dabei hat sich als besonders vorteilhaft herausgestellt, dass geeignete Dispergatoren einfach in bereits bestehende Anlangen eingebaut und/oder nachgerüstet werden können. Bei der erfindungsgemäßen Verwendung ist es des Weiteren bevorzugt, dass ein Überschuss an Phosgen gegenüber der Summe der eingesetzten Dihydroxydiarylalkane von 3 bis 20 mol-%, bevorzugt 4 bis 10 mol-%, besonders bevorzugt von 5 bis 9 mol-% eingesetzt wird. Die folgenden Beispiele dienen der beispielhaften Erläuterung der Erfindung und sind nicht als Beschränkung aufzufassen.

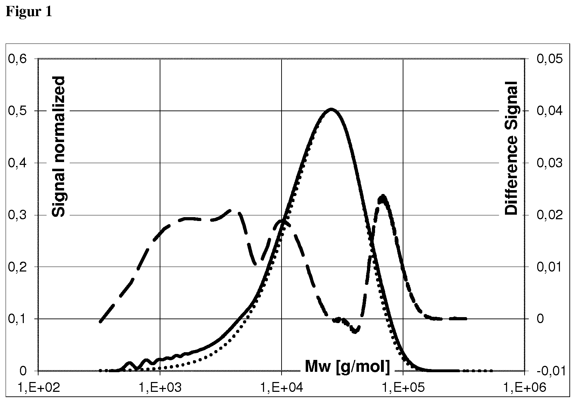

Erläuterung zu Figur 1:
Durchgezogene Linie: Original GPC, normiert, so dass die Fläche = 1 ist
Punktierte Linie: Schulz Flory Verteilung, angepasst, so dass das Maximum mit dem Maximum der GPC übereinstimmt
Gestrichelte Linie: Differenz zwischen den beiden Kurven (durchgezogene und punktierte Linie)
Aus dem Integral der Differenzkurve zwischen 500-5000 g/mol ergibt sich der Oligomeranteil

### Beispiele

Die Molekulargewichtsverteilung sowie die Mittelwerte Mn (Anzahlmittel) und Mw (Gewichtsmittel) wurde mittels Gelpermeationschromotographie (GPC) bestimmt. Instrument: Waters "Mixed Bed" Kolonnen) Messung in Methylenchlorid als Eluens (unter Verwendung von BPA-Homopolycarbonat-Standard mit einem Mw von 31.000 g/mol).

Über die Standauswertung hinaus, wurde die Abweichung der GPC von einer idealen Schulz-Flory Verteilung bestimmt. Die GPC wurde dazu zunächst normiert, so dass die Fläche unter der durchgezogenen Linie des Diagramms der Figur 1 erhalten wurde. Diese Fläche wurde auf 1 normiert. Weiterhin wurde eine Schulz-Flory (SF) Verteilung so angepasst, dass sie im Maximum in Höhe als auch Molekulargewicht mit der gemessen Verteilung übereinstimmt (gepunktete Linie in Figur 1). Die Differenz zwischen der gemessenen und angepassten SF-Verteilung ergibt die Differenzverteilung (gestrichelte Linie in Figur 1). In den vorliegenden Fällen ist die Schulz-Flory Verteilung enger, so dass die Differenzverteilung (bis auf Messungenauigkeiten) positiv ist. Am Maximum ist die Differenz aufgrund der Methode null, so dass die Differenzverteilung in einen niedermolekularen und einen hochmolekularen Teil zerfällt (siehe dazu auch Figur 1).

Aus dem Stand der Technik ist bekannt, dass ein hoher Oligomeranteil nachteilig für die Produktqualität ist. Hier wird in der Regel jedoch nur der gesamte Anteil von niedermolekularen Verbindungen unterhalb einer gewissen Grenze betrachtet oder der Anteil, der sich in Aceton löst. Nachteilig ist dabei, dass damit auch der unvermeidliche Oligomeranteil erfasst wird, der sich zudem mit dem Polycarbonat Typ (Viskosität, Mn) ändert. Die Methode der vorliegenden Erfindung korrigiert diese Abhängigkeit und bestimmt nur den verfahrensspezifischen Oligomeranteil.

Im Folgenden wurde als Dihydroxydiarylalkan 2,2'-bis-(4-hydroxyphenyl)-propan (Bisphenol A, BPA) eingesetzt, das Lösungsmittel der organischen Phase war ein Gemisch aus ca. 50 Gew.-% Methylenchlorid und 50 Gew.-% Monochlorbenzol. In allen Beispielen wurde ein Polycarbonat mit dem angegeben gewichtsmittlerem Molekulargewicht hergestellt, gemessen per GPC (Waters "Mixed Bed" Kolonnen in Methylenchlorid mit BPA-Homopolycarbonat-Standard mit einem Mw von 31.000 g/mol).

### Beispiel 1: Reduzierung des Phosgenüberschusses

Die kontinuierlichen Laborversuche wurden durchgeführt in einer Kombination von Pumpen und gerührten Reaktoren. Bei allen Experimenten wurden 70,1 g/h gasförmiges Phosgen in einem T-Stück in 772 g/h organischem Lösemittel (1:1 Methylenchlorid / Chlorbenzol) bei -7 °C gelöst. Die Menge an Lösungsmittel wurde berechnet, um am Ende eine 15 Gew% Polycarbonat Lösung zu erhalten. Die kontinuierlich zugeführte Phosgenlösung wurde in einem weiteren T-Stück mit 912 g/h 15 Gew% wässriger, alkalischer BPA Lösung (2 Mol NaOH pro Mol BPA), welche auf 30°C vorgewärmt war, in Kontakt gebracht. Diese BPA Lösung wurde durch einen Edelstahlfilter als Vordispergator in der Phosgenlösung dispergiert (Porengröße von 60 µm,). In allen Fällen wurde eine Wasser-in-Öl-Dispersion erhalten. Anschließend wurde der in Tabelle 1 angegebene Energieeintrag durch eine Rotorpumpe erzeugt.

Das Reaktionsgemisch wurde in eine Fink HMR040 Mischpumpe geleitet, welche bei 25°C temperiert wurde, so dass Phosgen am Ende der Reaktionspumpe so weit wie möglich abreagiert hat, aber noch vorhanden ist. Nach dieser Pumpe wurden in Beispielen 1a, 1c und 1d 3,29 g/h p-tert.-Butylphenol als Kettenabbrecher als 3 Gew%ige Lösung im gleichem Lösungsmittelgemisch wie oben zudosiert, und dieses Reaktionsgemisch wurde in einer weiteren HMR040 Pumpe bei 25°C mit 53,95 g/h. 32 Gew-%iger Natronlauge weiterreagieren gelassen, so dass der pH Wert am Ende des Reaktionssystem bei ca. 11,5 war. In Beispiel 1b erfolgte hier die Zugabe von 3,29 g/h p-tert.-Butylphenol als Kettenabbrecher als 3 Gew%ige Lösung im gleichem Lösungsmittelgemisch wie oben. Es folgten immer 2 Rührkessel mit jeweils einer Zahnradpumpe der Firma Ismatec. Die Dosierung von 0,679 g/h des Katalysators (10 Gew-% N-Ethylpiperidin, gelöst in Chlorbenzol) in einem T-Stück im Teflonschlauch erfolgte zwischen den beiden Rührkesseln (und Zahnradpumpen).

Insgesamt wurden kontinuierlich 156 g Polycarbonat in organischer Lösung erhalten, zusammen mit der wässriger Phase aus der Reaktion zu einem Phasentrenngefäß geführt, um diese zu trennen. Die Polycarbonatlösung wurde mit 10 Gew% HCl gewaschen und unter normalen Druck und Raumtemperatur getrocknet.

Tabelle 1 fasst die erhaltenen Ergebnisse des Beispiels 1 zusammen:

**Tabelle 1**

| | Einerg ieeintr ag | Phosg enüber schuss | Mn 0 | T Vorr. | Diff. id.MG V (PC) | Di-Ketten - abbreche r-carbonat (PC) | CO3 | Mn (PC) | Mw (PC) |
|---|---|---|---|---|---|---|---|---|---|
| | W/m³ | % | g/mol | °C | Fläche n% | ppm | Gew % | g/mol | g/mol |
| Beispi el 1a | 3,00 ^{∗} e⁷ | 16,2 | 750 | 35 | 2,72 | <50 | 0,65 | 10580 | 26980 |
| Beispi el 1b | 3,00 ^{∗} e⁷ | 16,2 | 3470 | 35 | 8,10 | <50 | 0,65 | 7870 | 26160 |
| Beispi el 1c | 3,00 ^{∗} e⁷ | 9,5 | 660 | 25 | 2,78 | <50 | 0,38 | 9800 | 26200 |
| Beispi el 1d | 3,00 ^{∗} e⁷ | 7 | 730 | 25 | 2,50 | <50 | 0,33 | 9990 | 25300 |

| | | | | | | | | | |
|---|---|---|---|---|---|---|---|---|---|
| Mn0: Molekulargewicht bei Zugabe von Kettenabbrecher Diff. id.MGV (PC): Differenzverteilung; siehe Erläuterung oben | | | | | | | | | |

Beispiel la zeigt, dass durch einen hohen Energieeintrag in Verfahrensschritt (a) ein Polycarbonat erhalten werden kann, welches einen geringen Gehalt an Oligomeren und Di-Kettenabbrechercarbonat aufweist. In Beispiel 1b wurde der Kettenabbrecher später zugegeben.

Die erfindungsgemäßen Beispielen 1c und 1d zeigen, dass es zudem möglich ist, bei einem hohen Energieeintrag den Phosgenüberschuss zu reduzieren. Gleichzeitig wird ein Polycarbonat erhalten mit guten bzw. sogar verbessertem Gehalt an Oligomeren und Di-Kettenabbrechercarbonat. Die Zugabe von NaOH erfolgt in Beispiel 1b zeitlich vor der Zugabe des Kettenabbrechers. Jedoch erfolgte die Zugabe des Kettenabbrechers so früh, dass davon ausgegangen wird, dass immer noch Phosgen im Reaktionssystem vorhanden ist.

Die Zugabe des Kettenabbrechers zu einem Zeitpunkt, bei dem kein Phosgen mehr im Reaktionssystem vorhanden ist, würde bedeuten, dass das Reaktionsprodukt R im Mittel einen noch höheres Molekulargewicht aufweist. Dadurch wäre ein noch höherer Anteil an Oligomeren zu erwarten.

### Beispiel 2

Als Vorrichtungen für die einzelnen Verfahrensschritte wurden verwendet:
Verfahrensschritt (A): Dispergator in Form einer Lochblendendüse mit einer Vordispergierung (mit einer Lochblende mit 5 Bohrungen mit jeweils 2,5 mm Durchmesser bei einer Dicke der Lochscheibe von 2,35 und einem Druckabfall von 0,2 bar bei 5,2 m/s Strömungsgeschwindigkeit), 26 ms Verweilzeit im Vordispergierraum (bei Beispielen 2a und 2b wurde die wässrige Phase durch den Vordispergator in die organische Phase geschickt; in Vergleichsbeispiel 2c wurde durch den Vordispergator die organische Phase in die wässrige Phase geschickt) und nachfolgender Dispergierung (mit einer weiteren Lochblende mit 18 Bohrungen mit jeweils 1,5 mm Durchmesser bei einer Dicke der Lochscheibe von 2,35 mm und 0,8 bar Druckabfall bei einer Strömungsgeschwindigkeit von 8,9 m/s bei Vergleichsbeispiel 2c (dies entspricht dem Beispiel 1 der DE102008012613 A1; mit einer weiteren Lochblende mit 18 Bohrungen mit jeweils 1,0 mm Durchmesser bei einer Dicke der Lochscheibe von 2,35 mm und 0,8 bar Druckabfall bei einer Strömungsgeschwindigkeit von 8,9 m/s bei den erfindungsgemäßen Beispielen 2a und 2b) durch die eine Flüssigkeit in die andere dispergiert wird
Verfahrensschritt (B): Ein Verweilzeitreaktor mit einer Verweilzeit von 0,2s bei 600 kg/h (Bisphenol-Lösung).
Verfahrensschritt (C): Ein Umpumpreaktor ausgestattet mit einer Zudosierstelle (z.B. für NaOH), einer Pumpe, einem Wärmetauscher, einem Überlaufbehälter und einer T-förmigen Entnahmestelle mit einem Volumen von 140 1, ausgestattet mit einer pH-und einer Leitfähigkeitssonde; bei Eintritt in den Umpumpreaktor erfolgt Redispergierung; in Beispiel 2a wird der Kettenabbrecher in den Umpumpreaktor zugegen.
Verfahrensschritt (D): Eine Austragspumpe mit vorgeschalteten Dosierstellen für Kettenabbrecher (in Beispiel 2b und Vergleichsbeispiel 2c wird hier der Kettenabbrecher zugegeben; in Beispiel 2a wird hier nichts zugegen) und NaOH-Lösung, dazwischen ein statischer Mischer, nachgeschaltet ein Schlangenrohrreaktor mit Misch- und Verweilzonen und einem Gesamtvolumen von 60 1 (erster Verweilreaktor), und nachgeschaltet ein weiterer Schlangenrohrreaktor (zweiter Verweilreaktor) mit einer Dosierstelle für Katalysator am Anfang des Reaktors und einem Gesamtvolumen von 80 1.

### Nachträgliche

Phasentrennung: Trenngefäß (Größe 4,15 m³ bei einem Stand von 50%).

Im Verfahrensschritt (A) wurden folgende Stoffströme eingesetzt:
500 kg/h wässrige Bisphenol-Lösung (15 Gew.-% eines Gemisches aus Bisphenol A und Bisphenol TMC, bezogen auf Gesamtgewicht der Lösung, 2.13 mol NaOH / mol Bisphenol-Lösung) in den Beispielen 2a und 2b (der Phosgenstrom und der Strom des Lösungsmittelgemisches (siehe unten) wurden hier entsprechend dem reduzierten Bisphenol-Strom entsprechend skaliert)
   oder
600 kg/h wässrige Bisphenol-Lösung (15 Gew.-% Bisphenol A, bezogen auf Gesamtgewicht der Lösung, 2.13 mol NaOH / mol Bisphenol-Lösung) in Vergleichsbeispiel 2c
   44,6 kg/h Phosgen
520 kg/h Lösungsmittelgemisch aus 54 Gew.-% Methylenchlorid und 46 Gew.-% Chlorbenzol

In Verfahrensschritt (B) und (C) wurden keine weiteren Stoffströme zusätzlich eingesetzt.

In Verfahrensschritt (D) wurden vor dem ersten Verweilreaktor folgende Stoffströme zusätzlich eingesetzt:
17,8 kg/h t-Butylphenollösung (20 Gew.-%, in Lösungsmittelgemisch aus 54 Gew.-% Methylenchlorid und 46 Gew.-% Chlorbenzol)
35 kg/h wässrige NaOH-Lösung mit 32 Gew.-% NaOH

In Verfahrensschritt (D) wurden im zweiten Verweilreaktor folgender Stoffstrom zusätzlich eingesetzt:
22,7 kg/h Katalysatorlösung (3 Gew.-%ige Lösung, Ethylpiperidin in Lösungsmittelgemisch aus 54 Gew.-% Methylenchlorid und 46 Gew.-% Chlorbenzol.

Die Temperatur im Umpumpreaktor betrug zwischen 35°C (nach dem Wärmetauscher) und 38°C (vor dem Wärmetauscher). Die Temperatur in den Schlangenrohrreaktoren in Verfahrensschritt (D) betrug jeweils 37°C und im Trenngefäß 35°C.

Die Dispergierrichtung war so eingestellt, dass die organische Phase in die wässrige Phase dispergiert wurde.

Tabelle 2 fasst die erhaltenen Ergebnisse zusammen.

**Tabelle 2**

| | Einergieei ntrag | Dispers ion | MnLo op | T Vo rr. | Diff. Id.MG V | Di-Kettenabbrec hercarbon at (PC) | CO3 | Mn (PC ) | Mw (PC ) |
|---|---|---|---|---|---|---|---|---|---|
| | W/m³ | | g/mol | °C | Fläche n% | ppm | Gew % | g/m ol | g/m ol |
| Beispiel 2a | 4,2 ^{∗} e⁶ | wo | < 900^{∗} | 60 | 3,50 | 200 | 0.75 | 120 20 | 316 50 |
| Beispiel 2b | 4,2 ^{∗} e⁶ | wo | 2320 | 60 | 5,00 | < 20 | 0.76 | 102 40 | 290 26 |
| Vergleichsbe ispiel 2c | 1,2 ^{∗} e⁶ | ow | 2210 | 50^{∗} | 6,20 | < 50 | 0.64 | 875 0 | 244 50 |

| | | | | | | | | | |
|---|---|---|---|---|---|---|---|---|---|
| *geschätzter Wert MnLoop: Molekulargewicht bei Zugabe von Kettenabbrecher Diff. id.MGV (PC): Differenzverteilung; siehe Erläuterung oben | | | | | | | | | |

In den Beispielen 2a und 2b wurde ein Phosgenüberschuss von 19 % eingesetzt. In Vergleichsbeispiel 2c wurde ein Phosgenüberschuss von 15 % eingesetzt. Da die Bisphenollösung des Vergleichsbeispiels eine andere Zusammensetzung aufweist als die der erfindungsgemäßen Beispiele, war eine Anpassung des Phosgenüberschusses notwendig. Dennoch ist zu erkennen, dass durch den in den Beispielen der DE 10 2008 012 613 A1 offenbarten Energieeintrag ein Polycarbonat erhalten wird, welches einen relativ hohen Oligomerenanteil aufweist. Durch Erhöhung des Energieeintrags (erfindungsgemäße Beispiele 2a und 2b) kann dieser Anteil unter Beibehaltung eines akzeptablen Di-Kettenabbrechercarbonat-Gehalts reduziert werden. Durch die unterschiedlichen Energieeinträge liegt bei den erfindungsgemäßen Beispielen 2a und 2b eine Wasser-in-Öl-Dispersion in Verfahrensschritt (a) vor, während im Vergleichsbeispiel 2c eine Öl-in-Wasser-Dispersion vorlag.

Auch an diesen Beispielen kann gesehen, werden dass der Zugabezeitpunkt des Kettenabbrechers weitere Vorteile in Bezug auf den Gehalt an Oligomeren und Di-Kettenabbrechercarbonat mit sich bringt.

## Patentansprüche

1. Kontinuierliches Verfahren zur Herstellung von Polycarbonat nach dem Phasengrenzflächenverfahren aus mindestens einem Dihydroxydiarylalkan, Phosgen, mindestens einem Katalysator und mindestens einem Kettenabbrecher, umfassend die Schritte
(a) Erzeugung einer Dispersion aus einer organischen und einer wässrigen Phase, indem in einem Dispergator kontinuierlich die organische Phase in die wässrige Phase oder die wässrige Phase in die organische Phase dispergiert wird, wobei die organische Phase wenigstens ein für das Polycarbonat geeignetes Lösungsmittel und zumindest einen Teil des Phosgens enthält und die wässrige Phase das mindestens eine Dihydroxydiarylalkan, Wasser und 1,8 Mol bis 2,2 Mol, bevorzugt 1,95 Mol bis 2,05 Mol Alkalilauge pro Mol Dihydroxydiarylalkan enthält,
(b) Zugabe mindestens eines Kettenabbrechers zur Dispersion aus Schritt (a) und
(c) Zugabe mindestens eines Katalysators zur aus Schritt (b) erhaltenen Mischung,
**dadurch gekennzeichnet, dass**
der Energieeintrag durch den Dispergator in Schritt (a) 2,5 ^{∗} e⁶W/m³ bis 5,0 ^{∗} e⁷ W/m³, bevorzugt 3,0 ^{∗} e⁶W/m³ bis 4,0 ^{∗} e⁷ W/m³, besonders bevorzugt von 1,0 ^{∗} e⁷W/m³ bis 3,5 ^{∗} e⁷ W/m³ beträgt.

2. Kontinuierliches Verfahren nach Anspruch 1, **dadurch gekennzeichnet, dass** in Verfahrensschritt (a) eine Wasser-in-Öl-Dispersion erzeugt wird.

3. Kontinuierliches Verfahren nach einem der Ansprüche 1 oder 2, **dadurch gekennzeichnet, dass** das Verfahren den Schritt der mindestens einmaligen Zugabe einer Alkalilauge umfasst.

4. Kontinuierliches Verfahren nach Anspruch 3, **dadurch gekennzeichnet, dass** die Zugabe des mindestens einen Kettenabbrechers zum Reaktionssystem in Verfahrensschritt (b) zeitlich vor der ersten der mindestens einmaligen Zugabe der Alkalilauge erfolgt.

5. Kontinuierliches Verfahren nach einem der Ansprüche 1 bis 4, **dadurch gekennzeichnet, dass** in Verfahrensschritt (a) ein Überschuss an Phosgen gegenüber der Summe der eingesetzten Dihydroxydiarylalkane von 3 bis 20 mol-%, bevorzugt 4 bis 10 mol-%, besonders bevorzugt von 5 bis 9 mol-% vorliegt.

6. Kontinuierliches Verfahren nach einem der Ansprüche 1 bis 5, **dadurch gekennzeichnet, dass** der mindestens eine Katalysator ausgewählt wird aus der Gruppe, bestehend aus einem tertiären Amin und einem Organophosphin.

7. Kontinuierliches Verfahren nach einem der Ansprüche 1 bis 6, **dadurch gekennzeichnet, dass** der mindestens eine Kettenabbrecher ausgewählt wird aus der Gruppe, bestehend aus Phenol, Alkylphenolen und deren Chlorkohlensäureester oder Säurechloride von Monocarbonsäuren, bevorzugt aus Phenol, tert-Butylphenol und iso-Octylphenol, Cumylphenol.

8. Kontinuierliches Verfahren nach einem der Ansprüche 1 bis 7, **dadurch gekennzeichnet, dass** das mindestens eine Dihydroxydiarylalkan ausgewählt wird aus der Gruppe, bestehend aus 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und beliebigen Mischungen davon.

9. Kontinuierliches Verfahren nach einem der Ansprüche 1 bis 8, **dadurch gekennzeichnet, dass** als Dispergator in Verfahrensschritt (a) mindestens eine Düse, Rohrblende, ein statischer Mischer, Pumpe und/oder ein Strahldispergator verwendet wird.

10. Kontinuierliches Verfahren nach einem der Ansprüche 1 bis 9, **dadurch gekennzeichnet, dass** der mindestens eine Kettenabbrecher in Verfahrensschritt (b) zu einem Zeitpunkt in das Reaktionssystem, umfassend zumindest das mindestens eine Dihydroxydiarylalkan, Phosgen und das Reaktionsprodukt R aus dem mindestens einen Dihydroxydiarylalkan und Phosgen, eingetragen wird, bei dem das Reaktionsprodukt R eine Mischung aus Verbindungen darstellt und diese Verbindungen im Mittel einen Polymerisationsgrad von mindestens einer Einheit und höchstens sechs Einheiten aufweisen, welche aus dem mindestens einen Dihydroxydiarylalkan durch die Reaktion mit dem Phosgen entstanden sind.

11. Kontinuierliches Verfahren nach Anspruch 10, **dadurch gekennzeichnet, dass** die Verbindungen der Mischung des Reaktionsprodukts R durch die allgemeine chemische Formel (I) dargestellt werden: 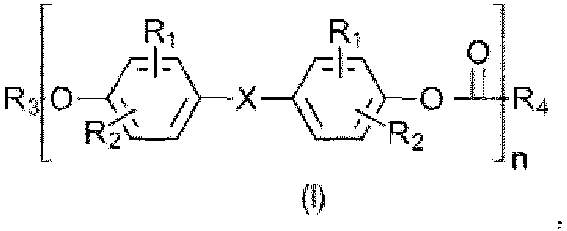 in der
R₁ und R₂ jeweils unabhängig voneinander für H, C1- bis C18-Alkyl-, C1- bis C18-Alkoxy, Halogen wie Cl oder Br oder für jeweils gegebenenfalls substituiertes Aryl- oder Aralkyl, bevorzugt für H oder C1 bis C12 Alkyl, besonders bevorzugt für H oder C1-bis C8-Alkyl und ganz besonders bevorzugt für H oder Methyl stehen,
R₃ für H, (C=O)-Cl oder (C=O)-OH steht,
R₄ für OH oder Cl steht,
X für eine Einfachbindung, -SO₂-, -CO-, -O-, -S-, C1- bis C6-Alkylen, C2- bis C5-Alkyliden oder C5- bis C6-Cycloalkyliden, welches mit C1- bis C6-Alkyl, vorzugsweise Methyl oder Ethyl, substituiert sein kann, ferner für C6- bis C12-Arylen, welches gegebenenfalls mit weiteren Heteroatome enthaltenden aromatischen Ringen kondensiert sein kann, steht, und
n für den Polymerisationsgrad und damit die Anzahl der Einheiten, welche aus dem mindestens einen Dihydroxydiarylalkan durch die Reaktion mit dem Phosgen entstanden ist, steht und im Mittel einen Wert von 1 bis 6 haben kann.

12. Verwendung eines Energieeintrags von 2,5 ^{∗} e⁶W/m³ bis 5,0 ^{∗} e⁷ W/m³, bevorzugt 3,0 ^{∗} e⁶W/m³ bis 4,0 ^{∗} e⁷ W/m³, besonders bevorzugt von 1,0 ^{∗} e⁷W/m³ bis 3,5 ^{∗} e⁷ W/m³ in ein System, umfassend eine organische Phase und eine wässrige Phase, wobei
die organische Phase wenigstens ein für das Polycarbonat geeignetes Lösungsmittel und zumindest einen Teil des Phosgens und
die wässrige Phase zumindest mindestens ein Dihydroxydiarylalkan, Wasser, 1,8 Mol bis 2,2 Mol, bevorzugt 1,95 Mol bis 2,05 Mol Alkalilauge pro Mol Dihydroxydiarylalkan und gegebenenfalls mindestens einen Kettenabbrecher enthält
zur Reduzierung des Phosgenüberschusses bei der Herstellung eines Polycarbonats nach dem Phasengrenzflächenverfahren.

13. Verwendung nach Anspruch 12, **dadurch gekennzeichnet, dass** der Energieeintrag durch einen Dispergator erfolgt.

14. Verwendung nach einem der Ansprüche 12 oder 13, **dadurch gekennzeichnet, dass** das Verfahren zur Herstellung von Polycarbonat nach dem Phasengrenzflächenverfahren kontinuierlich durchgeführt wird.

15. Verwendung nach einem der Ansprüche 12 bis 14, **dadurch gekennzeichnet, dass** ein Überschuss an Phosgen gegenüber der Summe der eingesetzten Dihydroxydiarylalkane von 3 bis 20 mol-%, bevorzugt 4 bis 10 mol-%, besonders bevorzugt von 5 bis 9 mol-% eingesetzt wird.

## Claims

1. Continuous process for producing polycarbonate by the interfacial process from at least one dihydroxydiarylalkane, phosgene, at least one catalyst and at least one chain terminator, comprising the steps of
(a) generating a dispersion from an organic and an aqueous phase by continuously dispersing the organic phase in the aqueous phase or the aqueous phase in the organic phase in a disperser, wherein the organic phase contains at least one solvent suitable for the polycarbonate and at least a portion of the phosgene and the aqueous phase contains the at least one dihydroxydiarylalkane, water and 1.8 mol to 2.2 mol, preferably 1.95 mol to 2.05 mol of aqueous alkali metal hydroxide solution per mol of dihydroxydiarylalkane,
(b) adding at least one chain terminator to the dispersion from step (a) and
(c) adding at least one catalyst to the mixture obtained from step (b),
**characterized in that**
the energy input by the disperser in step (a) is 2.5 * e⁶W/m³ to 5.0 * e⁷ W/m³, preferably 3.0 * e⁶ W/m³ to 4.0 * e⁷ W/m³, particularly preferably from 1.0 * e⁷ W/m³ to 3.5 * e⁷ W/m³.

2. Continuous process according to Claim 1, **characterized in that** process step (a) comprises producing a water-in-oil dispersion.

3. Continuous process according to either of Claims 1 and 2, **characterized in that** the process comprises the step of one or more additions of an aqueous alkali metal hydroxide solution.

4. Continuous process according to Claim 3, **characterized in that** the adding of the at least one chain terminator to the reaction system in process step (b) is performed at a juncture prior to the first of the one or more additions of the aqueous alkali metal hydroxide solution.

5. Continuous process according to any of Claims 1 to 4, **characterized in that** in process step (a) an excess of phosgene relative to the sum of the employed dihydroxydiarylalkanes of 3 to 20 mol%, preferably 4 to 10 mol%, particularly preferably of 5 to 9 mol%, is present.

6. Continuous process according to any of Claims 1 to 5, **characterized in that** the at least one catalyst is selected from the group consisting of a tertiary amine and an organophosphine.

7. Continuous process according to any of Claims 1 to 6, **characterized in that** the at least one chain terminator is selected from the group consisting of phenol, alkylphenols and chlorocarbonic acid esters thereof or acid chlorides of monocarboxylic acids, preferably from phenol, tert-butylphenol and iso-octylphenol, cumylphenol.

8. Continuous process according to any of Claims 1 to 7, **characterized in that** the at least one dihydroxydiarylalkane is selected from the group consisting of 4,4'-dihydroxydiphenyl, 1,1-bis(4-hydroxyphenyl)phenylethane, 2,2-bis(4-hydroxyphenyl)propane, 2,2-bis(3,5-dimethyl-4-hydroxyphenyl)propane, 1,1-bis(4-hydroxyphenyl)cyclohexane, 1,1-bis(4-hydroxyphenyl)-3,3,5-trimethylcyclohexane and any desired mixtures thereof.

9. Continuous process according to any of Claims 1 to 8, **characterized in that** at least one nozzle, pipe baffle, static mixer, pump and/or jet disperser is used as the disperser in process step (a).

10. Continuous process according to any of Claims 1 to 9, **characterized in that** in process step (b) the at least one chain terminator is introduced into the reaction system comprising at least the at least one dihydroxydiarylalkane, phosgene and the reaction product R of the at least one dihydroxydiarylalkane and phosgene at a juncture at which the reaction product R is a mixture of compounds and these compounds on average have a degree of polymerization of at least one unit and at most six units formed from the at least one dihydroxydiarylalkane by the reaction with the phosgene.

11. Continuous process according to Claim 10, **characterized in that** the compounds of the mixture of the reaction product R are represented by the general chemical formula (I): 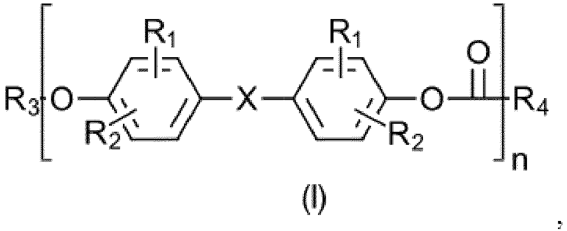 in which
R₁ and R₂ independently represent H, C1 to C18 alkyl, C1 to C18 alkoxy, halogen such as Cl or Br or in each case optionally substituted aryl or aralkyl, preferably H or C1 to C12 alkyl, particularly preferably H or C1 to C8 alkyl, and very particularly preferably H or methyl,
R₃ represents H, (C=O)-Cl or (C=O)-OH,
R₄ represents OH or Cl,
X represents a single bond, -SO₂-, -CO-, -O-, -S-, C1 to C6 alkylene, C2 to C5 alkylidene or C5 to C6 cycloalkylidene, which may be substituted by C1 to C6 alkyl, preferably methyl or ethyl, or else represents C6 to C12 arylene, which may optionally be fused to further aromatic rings containing heteroatoms, and
n represents the degree of polymerization and thus the number of units formed from the at least one dihydroxydiarylalkane by the reaction with the phosgene and on average may have a value of 1 to 6.

12. Use of an energy input of 2.5 * e⁶ W/m³ to 5.0 * e⁷ W/m³, preferably 3.0 * e⁶ W/m³ to 4.0 * e⁷ W/m³, particularly preferably of 1.0 * e⁷ W/m³ to 3.5 * e⁷ W/m³ in a system comprising an organic phase and an aqueous phase, wherein
the organic phase contains at least one solvent suitable for the polycarbonate and at least a portion of the phosgene and
the aqueous phase contains at least one dihydroxydiarylalkane, water, 1.8 mol to 2.2 mol, preferably 1.95 mol to 2.05 of aqueous alkali metal hydroxide solution per mol of dihydroxydiarylalkane and optionally at least one chain terminator to reduce the phosgene excess when producing a polycarbonate by the interfacial process.

13. Use according to Claim 12, **characterized in that** the energy input is effected via a disperser.

14. Use according to either of Claims 12 and 13, **characterized in that** the process for producing polycarbonate by the interfacial process is performed in continuous fashion.

15. Use according to any of Claims 12 to 14, **characterized in that** an excess of phosgene relative to the sum of the employed dihydroxydiarylalkanes of 3 to 20 mol%, preferably 4 to 10 mol%, particularly preferably of 5 to 9 mol%, is employed.

## Revendications

1. Procédé continu pour la préparation de polycarbonate selon le procédé interfacial à partir d'au moins un dihydroxydiarylalcane, de phosgène, d'au moins un catalyseur et d'au moins un agent d'interruption de chaîne, comprenant les étapes
(a) production d'une dispersion d'une phase organique et d'une phase aqueuse, en ce que la phase organique est dispersée en continu dans la phase aqueuse ou la phase aqueuse est dispersée en continu dans la phase organique dans un dispositif de dispersion, la phase organique contenant au moins un solvant approprié pour le polycarbonate et au moins une partie du phosgène et la phase aqueuse contenant ledit au moins un dihydroxydiarylalcane, de l'eau et 1,8 mole à 2,2 moles, de préférence 1,95 mole à 2,05 moles de lessive alcaline par mole de dihydroxydiarylalcane,
(b) addition d'au moins un agent d'interruption de chaîne à la dispersion de l'étape (a) et
(c) addition d'au moins un catalyseur au mélange obtenu de l'étape (b),
**caractérisé en ce que** l'apport d'énergie par le dispositif de dispersion dans l'étape (a) est de 2,5*e⁶ W/m³ à 5, 0*e^{7 w}/m³, de préférence de 3,0*e⁶ W/m³ à 4,0*e⁷ W/m³, de manière particulièrement préférée de 1,0*e⁷ W/m³ à 3,5*e⁷ W/m³.

2. Procédé continu selon la revendication 1, **caractérisé en ce qu'**une dispersion eau-dans-huile est obtenue dans l'étape de procédé (a).

3. Procédé continu selon l'une quelconque des revendications 1 ou 2, **caractérisé en ce que** le procédé comprend l'étape d'au moins une addition unique d'une lessive alcaline.

4. Procédé continu selon la revendication 3, **caractérisé en ce que** l'addition dudit au moins un agent d'interruption de chaîne au système réactionnel dans l'étape de procédé (b) a lieu temporellement avant la première de ladite au moins une addition unique de lessive alcaline.

5. Procédé continu selon l'une quelconque des revendications 1 à 4, **caractérisé en ce que**, dans l'étape de procédé (a), il existe un excès de phosgène par rapport à la somme des dihydroxydiarylalcanes utilisés de 3 à 20% en mole, de préférence de 4 à 10% en mole, de manière particulièrement préférée de 5 à 9% en mole.

6. Procédé continu selon l'une quelconque des revendications 1 à 5, **caractérisé en ce que** ledit au moins un catalyseur est choisi dans le groupe constitué par une amine tertiaire et une organophosphine.

7. Procédé continu selon l'une quelconque des revendications 1 à 6, **caractérisé en ce que** ledit au moins un agent d'interruption de chaîne est choisi dans le groupe constitué par le phénol, les alkylphénols et leurs esters d'acide chlorocarbonique ou les chlorures d'acides monocarboxyliques, de préférence parmi le phénol, le tert-butylphénol et l'iso-octylphénol, le cumylphénol.

8. Procédé continu selon l'une quelconque des revendications 1 à 7, **caractérisé en ce que** ledit au moins un dihydroxydiarylalcane est choisi dans le groupe constitué par le 4,4'-dihydroxydiphényle, le 1,1-bis-(4-hydroxyphényl)-phényléthane, le 2,2-bis-(4-hydroxyphényl)-propane, le 2,2-bis-(3,5-diméthyl-4-hydroxyphényl)-propane, le 1,1-bis-(4-hydroxyphényl)-cyclohexane, le 1,1-bis-(4-hydroxyphényl)-3,3,5-triméthylcyclohexane et des mélanges quelconques de ceuxci.

9. Procédé continu selon l'une quelconque des revendications 1 à 8, **caractérisé en ce qu'**on utilise, comme dispositif de dispersion dans l'étape de procédé (a), au moins une buse, un tamis tubulaire, un mélangeur statique, une pompe et/ou un dispositif de dispersion à jets.

10. Procédé continu selon l'une quelconque des revendications 1 à 9, **caractérisé en ce que** ledit au moins un agent d'interruption de chaîne dans l'étape de procédé (b) est introduit dans le système réactionnel, comprenant au moins ledit au moins un dihydroxydiarylalcane, du phosgène et le produit de réaction R dudit au moins un dihydroxydiarylalcane et du phosgène, à un moment où le produit de réaction R représente un mélange de composés et où ces composés présentent en moyenne un degré de polymérisation d'au moins un motif et d'au plus six motifs qui sont formés à partir dudit au moins un dihydroxydiarylalcane par la réaction avec le phosgène.

11. Procédé continu selon la revendication 10, **caractérisé en ce que** les composés du mélange du produit de réaction R sont représentés par la formule chimique générale (I) : 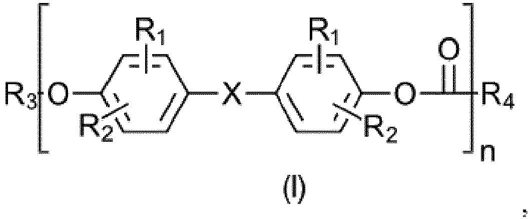 dans laquelle
R₁ et R₂ représentent, à chaque fois indépendamment l'un de l'autre, H, C₁-C₁₈-alkyle, C₁-C₁₈-alcoxy, halogène tel que Cl ou Br ; ou aryle ou aralkyle, à chaque fois le cas échéant substitué ; de préférence H ou C₁-C₁₂-alkyle, de manière particulièrement préférée H ou C₁-C₈-alkyle et de manière tout particulièrement préférée H ou méthyle,
R₃ représente H, (C=O)-Cl ou (C=O)-OH,
R₄ représente OH ou Cl,
X représente une simple liaison, -SO₂-, -CO-, -O-, -S-, C₁-C₆-alkylène, C₂-C₅-alkylidène ou C₅-C₆-cycloalkylidène, qui peut être substitué par C₁-C₆-alkyle, de préférence par méthyle ou éthyle ; en outre C₆-C₁₂-arylène, qui peut le cas échéant être condensé avec d'autres cycles aromatiques contenant des hétéroatomes, et
n représente le degré de polymérisation et donc le nombre de motifs qui sont formés à partir dudit au moins un dihydroxydiarylalcane par réaction avec le phosgène et peut posséder en moyenne une valeur de 1 à 6.

12. Utilisation d'un apport d'énergie de 2,5*e⁶ W/m³ à 5,0*e⁷ W/m³, de préférence de 3,0*e⁶ W/m³ à 4,0*e⁷ W/m³, de manière particulièrement préférée de 1,0*e⁷ W/m³ à 3,5*e⁷ W/m³ dans un système, comprenant une phase organique et une phase aqueuse, la phase organique contenant au moins un solvant approprié pour le polycarbonate et au moins une partie du phosgène et
la phase aqueuse contenant au moins un dihydroxydiarylalcane, de l'eau, 1,8 mole à 2,2 moles, de préférence 1,95 mole à 2,05 de lessive alcaline par mole de dihydroxydiarylalcane et le cas échéant au moins un agent d'interruption de chaîne
pour la réduction de l'excès de phosgène lors de la préparation d'un polycarbonate selon le procédé interfacial.

13. Utilisation selon la revendication 12, **caractérisée en ce que** l'apport d'énergie a lieu par un dispositif de dispersion.

14. Utilisation selon l'une quelconque des revendications 12 à 13, **caractérisée en ce que** le procédé pour la préparation de polycarbonate selon le procédé interfacial est réalisé en continu.

15. Utilisation selon l'une quelconque des revendications 12 à 14, **caractérisée en ce qu'**on utilise un excès de phosgène par rapport à la somme des dihydroxydiarylalcanes utilisés de 3 à 20% en mole, de préférence de 4 à 10% en mole, de manière particulièrement préférée de 5 à 9% en mole.
